(19) Europäisches Patentamt
European Patent Office
Office européen des brevets

(11) EP 1 978 041 A1

(12) **EUROPÄISCHE PATENTANMELDUNG**

(43) Veröffentlichungstag:
**08.10.2008 Patentblatt 2008/41**

(51) Int Cl.:
***C08F 232/02*** *(2006.01)* ***C08F 4/6592*** *(2006.01)*

(21) Anmeldenummer: **08002988.7**

(22) Anmeldetag: **19.02.2008**

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **02.04.2007 DE 102007015707**

(71) Anmelder: **Topas Advanced Polymers GmbH
65926 Frankfurt (DE)**

(72) Erfinder:
- **Ruchatz, Dieter
42579 Heiligenhaus (DE)**
- **Schauwienold, Anne-Meike
65719 Hofheim (DE)**
- **Jörg, Peter
63263 Neu-Isenburg (DE)**

(74) Vertreter: **Ackermann, Joachim
Postfach 11 13 26
60048 Frankfurt am Main (DE)**

(54) **Cycloolefin-Copolymere, Verfahren zu ihrer Herstellung, deren Verwendung und Katalysatoren**

(57) Beschrieben werden Cyclololefin-Copolymere, die sich durch die Anwesenheit von racemischen Diaden von wiederkehrenden polycyclischen Einheiten und zusätzlich von racemischen Triaden von wiederkehrenden polycyclischen Einheiten auszeichnen.

Diese Copolymeren können durch Copolymerisation von polycyclischen Olefinen mit linearen Olefinen in Gegenwart von Metallocenkatalysatoren hergestellt werden, die keine $C_s$-Symmetrie bezüglich der Ebene Zentroid-M-Zentroid aufweisen.

Die neuen Copolymeren können zur Herstellung von Formkörpern, insbesondere von Folien, eingesetzt werden.

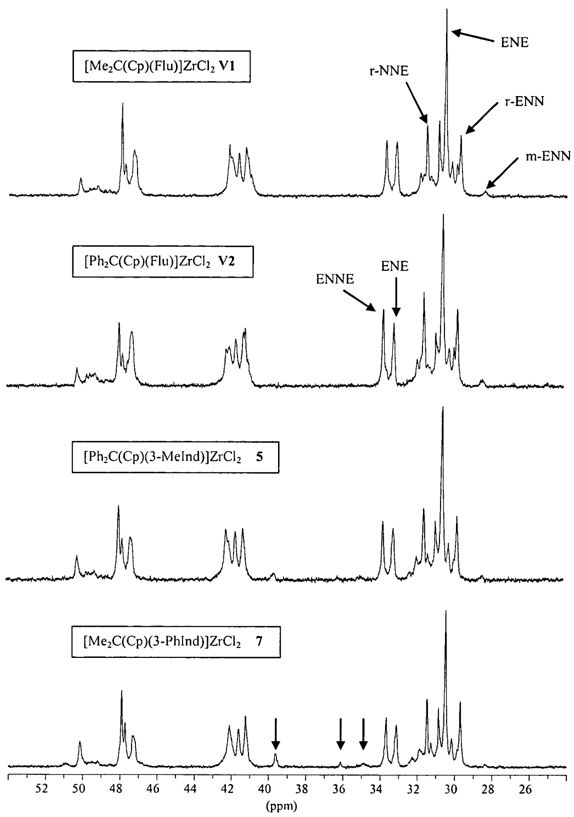


Fig. 1



Printed by Jouve, 75001 PARIS (FR)

## Beschreibung

Die vorliegende Erfindung betrifft racemisch verknüpfte Cycloolefin-Copolymere mit einer besonderen Mikrostruktur, ein Verfahren zur Herstellung dieser Copolymere, ausgewählte in diesem Verfahren einsetzbare Katalysatoren und die Verwendung der Cycloolefin-Copolymere.

Die makroskopischen Eigenschaften von Cycloolefin-Copolymeren hängen von der Mikrostruktur der Polymerkette ab. Die Mikrostruktur der Polymerkette wird durch die Art des verwendeten Katalysators beeinflußt.

In R. A. Wendt, G. Fink, Macromol. Chem. Phys. 2001, 202, 3490 wird die Mikrostruktur von Ethen/Norbornen-Copolymeren untersucht, die mit Hilfe verschiedener Katalysatorsysteme hergestellt wurden. Da Norbornen allgemein nur eine geringe Neigung zur Blockbildung zeigt, werden beim Einsatz der meisten bekannten Katalysatoren mit einem Überschuß an Norbornen alternierende Copolymere gebildet. Beispiele sind allerdings auch für racemisch und mesomerisch verknüpfte Norbornendiaden beschrieben. Zum Beispiel können mit Hilfe des Katalysatorsystems $Me_2C(Cp)(Flu)ZrCl_2$ (Me = Methyl, Cp = Cyclopentadienyl, Flu = Fluorenyl) Copolymere mit racemisch verknüpften Norbornendiaden erzeugt werden. Ferner werden mit Hilfe von $Me_2Si[Ind]_2ZrCl_2$-Katalysatoren (Ind = Indenyl) Ethen /Norbornen-Copolymere mit mesomerisch verknüpften Diaden erzeugt, die im $^{13}C$-NMR-Spektrum außerdem Signale zwischen 34,5 und 40,5 ppm zeigen. Diese Signale sind vermutlich Norbornen-Triaden zuzuordnen. Den Autoren ist es jedoch nicht gelungen, Copolymere herzustellen, die racemisch verknüpfte Diaden enthalten und im $^{13}C$-NMR-Spektrum außerdem Signale zwischen 34,5 und 40,5 ppm zeigen.

Aufgabe der vorliegenden Erfindung ist daher die Bereitstellung von Cycloolefin-Copolymeren mit neuer Mikrostruktur, welche racemisch verknüpfte Diaden der polycyclischen Einheiten und Triaden der polycyclischen Einheiten aufweisen, und die für das Norbornen-Ethylensystem im $^{13}C$-NMR-Spektrum zusätzlich Signale zwischen 34,5 und 40,5 ppm enthalten, Verfahren zu ihrer Herstellung und ausgewählte in diesen Verfahren einsetzbare Katalysatoren.

Diese Aufgabe wird durch die Merkmale der unabhängigen Ansprüche 1 und 13 gelöst.

Spezielle Ausführungsformen der Erfindung sind durch die Unteransprüche definiert.

Überraschend hat sich herausgestellt, daß spezielle Metallocen-Katalysatoren, die keine $C_s$-Symmetrie zur Ebene Zentroid-Metall-Zentroid zeigen, für die Copolymerisation von Cycloolefinen mit 1-Olefinen geeignet sind, mit deren Hilfe Copolymere mit spezieller Mikrostruktur bereitgestellt werden können.

Diese Mikrostruktur ist gekennzeichnet durch die Präsenz von racemischen Diaden von wiederkehrenden polycyclischen Einheiten und zusätzlich durch weitere wiederkehrende polycyclische Einheiten. Racemisch verknüpfte Norbornen-Diaden in Ethylen-Norbornen-Copolymeren weisen charakteristische Signale im $^{13}C$-NMR-Spektrum auf. Diese Signale zeigen eine chemische Verschiebung von 29,44 ppm und 31,24 ppm, wobei als Lösungsmittel $C_2D_2Cl_4$ eingesetzt wird und das mittlere Lösungsmittelsignal eine chemische Verschiebung von 74,00 ppm hat. Bei den zusätzlichen wiederkehrenden polycyclischen Einheiten wird angenommen, dass es sich um racemische Cycloolefintriaden handelt, welche im Fall von Ethylen-Norbornen-Copolymeren im $^{13}C$-NMR-Spektrum zusätzliche Signale zwischen 34,5 und 40,5 ppm bewirken. Diaden sind definiert als zwei direkt miteinander verknüpfte polycyclische Olefineinheiten und Triaden sind definiert als drei direkt miteinander verknüpfte polycyclische Olefineinheiten.

Unter Zentroid ist im Rahmen der vorliegenden Beschreibung das Zentrum des mit dem Metall durch Komplexbildung verbundenen Cyclopentadienylringes zu verstehen. Dabei kann es sich um einen Cyclopentadienylliganden handeln oder um einen substituierten Cyclopentadienylliganden oder um einen höher kondensierten Liganden, der einen Cyclopentadienylring aufweist und der gegebenenfalls substituiert sein kann.

Durch die Zentren des Metallatoms und der beiden Zentroide wird eine Ebene definiert, welche eine Symmetrieebene darstellt. Im erfindungsgemäßen Verfahren eingesetzte Katalysatoren weisen keine $C_s$-Symmetrie in Bezug auf diese Ebene auf.

Einige dieser Metallocen-Katalysatoren sind bereits für die Polymerisation von 1-Olefinen eingesetzt worden.

In dem Artikel "Asymmetric Zirconocene Precursors for Catalysts of Propylene Polymerisation", Fierro, Ricardo et al., J. Polym. Sci., Part A: Polym. Chem. (1994), 32(15), 2817-24 werden Propenpolymerisationen unter Verwendung von racemischen Isopropyliden (1-$\eta^5$-cyclopentadienyl)-($\eta^5$-indenyl)-dichlorzirkonium und dessen 3-Methylindenylderivat beschrieben. Beide Derivate führen bei der Propenpolymerisation zu ähnlichen Produkten.

In der JP-A-05/043619 wird die Polymerisation von Ethen in Gegenwart von Isopropyliden(cyclopentadienyl)(indenyl)zirkoniumdichlorid und Methylaluminoxan in Toluol beschrieben. Bei der Polymerisation entsteht verzweigtes Polyethylen ohne Zugabe eines Comonomeren.

In dem Artikel "Syndiospecific Propylene Polymerization with C1 Symmetric Group 4 ansa-Metallocene Catalysts", Leino, Reko, et al., Macromolecules (2001), 34(7), 2072-2082 werden verbrückte und substituierte Cyclopentadieny-3-R-indenylmetallocene beschrieben. Die Polymerisation von Propen mit Hilfe dieser Katalysatoren führt zu syndiotaktischem Polypropylen.

In der JP-A-52/02124 wird die Polymerisation von 1-Olefinen in Gegenwart von Metallocen-Katalysatoren und Aluminoxanen beschrieben. Die Metallocen-Katalysatoren haben eine verbrückte Cyclopentadienyl-Sandwich-Struktur, wobei einer der Cyclopentadienylringe substituiert ist.

"Synthesis, structure, and catalytic properties of ansa-zirconocenes, Me2X(Cp)(RInd)ZrCl2 (X=C, Si, R=2-p or 3-p-tolyl)", Yoon, Sung Cheol et al., J. Organomet. Chem. (1997), 534(1-2), 81-87 beschreibt neue Metallocenkomplexe, die mit dem Ziel entwickelt wurden, Katalysatoren für die Herstellung von syndiotaktischem Polypropen bereitzustellen. Die synthetisierten Komplexe zeigen jedoch nur eine geringe Syndiospezifität.

Der Artikel "Syndiospecific Propylene Polymerization Using C1-Symmetric ansa-Metallocene Catalysts: Substituent and Bridge Effects", Gomez, Fernando J., et al., Macromolecules (2002), 35(9), 3358-3368 beschreibt die Synthese einer Reihe von C1-symmetrischen ansa-Metallocenen ([Me2X(Cp)(2-R1-3-R2-Ind)]ZrCl2, X = C, Si; R1= H, Me; R2 = Me, Et, CH2SiMe3), und deren katalytisches Verhalten bei der Polymerisation von Propen. In Abhängigkeit von Substituentengröße, Substituenten-muster und Brückeneinheit wurde Polypropylen mit verschieden hohem Grad an Syndiotaktizität ([rrrr] = 28-66%) erhalten.

Erfindungsgemäß wird nun ein Verfahren zur Copolymerisation von 1-Olefinen mit Cycloolefinen bereitgestellt. Dieses Verfahren beinhaltet die Polymerisation mindestens eines Cycloolefins der folgenden Formel (I)

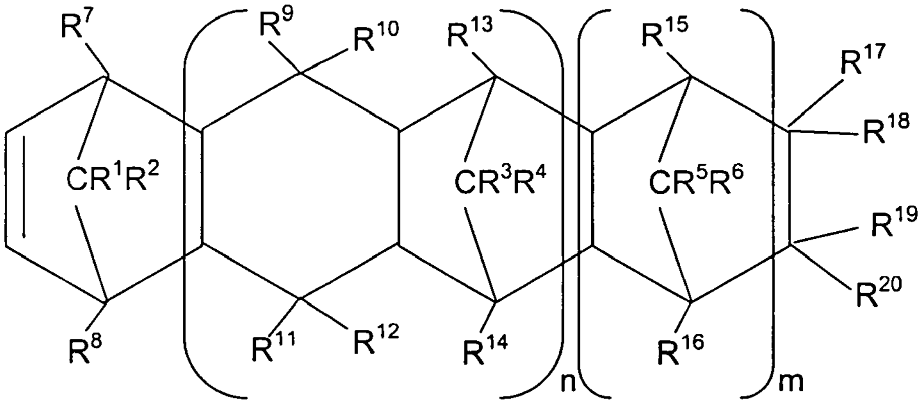

(I)

in der

n für 0 oder 1 steht,

m für 0, oder eine positive ganze Zahl steht, vorzugsweise für 0, 1 oder 2,

$R^1$, $R^2$, $R^3$, $R^4$, $R^5$, $R^6$ unabhängig voneinander aus der Gruppe ausgewählt sind, die aus Wasserstoff, Halogen, aliphatischen Kohlenwasserstoffgruppen, aromatischen Kohlenwasserstoffgruppen und $C_{1-40}$-Alkoxygruppen besteht,

$R^7$, $R^8$, $R^9$, $R^{10}$, $R^{11}$, $R^{12}$, $R^{13}$, $R^{14}$, $R^{15}$, $R^{16}$ unabhängig voneinander aus der Gruppe ausgewählt sind, die aus Wasserstoff und aliphatischen Kohlenwasserstoffgruppen besteht,

$R^{17}$, $R^{18}$, $R^{19}$, $R^{20}$ unabhängig voneinander aus der Gruppe ausgewählt sind, die aus Wasserstoff, Halogenen und aliphatischen Kohlenwasserstoffgruppen besteht, wobei $R^{17}$ und $R^{19}$ auch derart aneinander gebunden sein können, daß sie einen einfachen Ring oder ein Ringsystem mit mehreren Ringen bilden, wobei der Ring oder die Ringe gesättigt oder ungesättigt sein können,

mit mindestens einem 1-Olefin der Formel

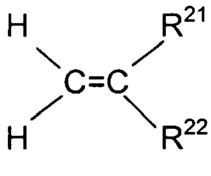

(II)

wobei $R^{21}$ und $R^{22}$ unabhängig voneinander aus der Gruppe ausgewählt sind, die aus Wasserstoff und Kohlenwasserstoffgruppen besteht, in Gegenwart eines ausgewählten Metallocenkatalysators.

Bevorzugt werden Cycloolefine der Formel (I) eingesetzt, wobei n für 0 und m für 0 oder 1 stehen, $R^7$, $R^8$, $R^{15}$, $R^{16}$, $R^{17}$ und $R^{19}$ für Wasserstoff stehen und $R^1$, $R^2$, $R^5$, $R^6$, $R^{18}$ und $R^{20}$ unabhängig voneinander aus der Gruppe ausgewählt sind, die aus Wasserstoff und $C_{6-10}$-Arylgruppen und $C_{1-8}$-Alkylgruppen besteht.

Bevorzugt werden ferner 1-Olefine der Formel (II) eingesetzt, wobei $R^{21}$ und $R^{22}$ unabhängig voneinander aus der Gruppe ausgewählt sind, die aus Wasserstoff, $C_{6-10}$-Arylresten und $C_{1-20}$-Alkylresten besteht. Beispiele für ganz

besonders bevorzugte 1-Olefine der Formel (II) sind Ethen und Propen.

Besonders bevorzugt ist die Copolymerisation von Ethen und Norbornen.

Die Herstellung der erfindungsgemäßen Copolymerisate erfolgt unter ringerhaltender Polymerisation, d.h. die bi- oder polycyclische Struktur der eingesetzten Monomereinheiten bleiben bei der Polymerisation erhalten.

Erfindungsgemäß wird ein Katalysatorsystem eingesetzt, das Metallocen-Verbindungen der folgenden Formel (III) enthält

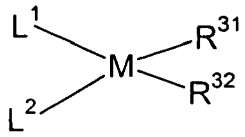

(III),

worin

M für ein Metall der Gruppe IIIb, IVb, Vb und VIb des Periodensystems der Elemente steht, bevorzugt für ein Metall der Gruppe IV und ganz besonders bevorzugt für Zirkonium,

$R^{31}$ und $R^{32}$ gleich oder verschieden sind und aus der Gruppe ausgewählt werden, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können, bevorzugt stehen $R^{31}$ und $R^{32}$ für Halogen und ganz besonders bevorzugt für Chlor, und

$L_1$ und $L_2$ stehen unabhängig voneinander für Liganden, die jeweils mindestens einen Cyclopentadienylring enthalten, wobei die Reste $R^{31}$, $R^{32}$, $L_1$ und $L_2$ so ausgewählt sind, daß die Metallocen-Verbindung keine $C_s$-Symmetrie bezüglich der Ebene Zentroid-M-Zentroid besitzt.

Bespiele für Liganden $L_1$ und $L_2$ sind unsubstituierte und substituierte Cyclopentadienylliganden oder unsubstituierte und substituierte Indenylliganden.

Erfindungsgemäß wird bevorzugt ein Katalysatorsystem eingesetzt, das Metallocen-Verbindungen der folgenden Formel (IIIa) enthält

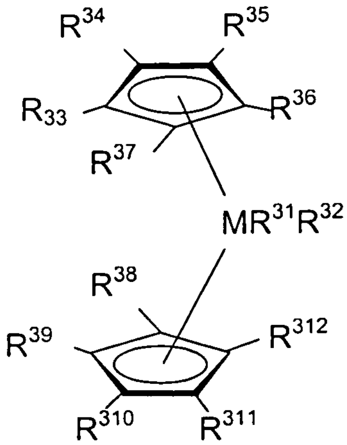

(IIIa)

enthält. M steht für ein Metall der Gruppe IIIb, IVb, Vb und VIb des Periodensystems der Elemente. Bevorzugt ist M ein Metall der Gruppe IV und ganz besonders bevorzugt Zirkonium.

$R^{31}$ und $R^{32}$ sind gleich oder verschieden und aus der Gruppe ausgewählt, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können. Bevorzugt stehen beide für Halogen und ganz besonders bevorzugt für Chlor.

$R^{33}$, $R^{34}$, $R^{35}$, $R^{36}$, $R^{37}$, $R^{38}$, $R^{39}$, $R^{310}$, $R^{311}$ und $R^{312}$ können gleich oder verschieden sein und sind aus der Gruppe ausgewählt, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können. Dabei können ein oder mehrere $\alpha$-substituierte Paare aus der Gruppe $R^{33}$, $R^{34}$, $R^{35}$, $R^{36}$ und $R^{37}$ und aus der Gruppe $R^{38}$, $R^{39}$, $R^{310}$, $R^{311}$ und $R^{312}$ auch gemeinsam eine Alkylkette bilden, derart, daß ein oder mehrere Ringe gebildet werden. Bevorzugt bilden $R^{37}$ und $R^{38}$ eine $C_{1-20}$-Alkylenbrücke, ganz besonders bevorzugt eine Methylenbrücke, und insbesondere eine alkylsubstituierte oder arylsubstituierte Methylenbrücke, die insbesondere mit zwei Phenylresten oder zwei Methylresten substituiert ist.

Entscheidend ist für die Verbindungen der Formel IIIa, daß die Substituenten $R^{33}$, $R^{34}$, $R^{35}$, $R^{36}$, $R^{37}$, $R^{38}$, $R^{39}$, $R^{310}$, $R^{311}$ und $R^{312}$ so ausgewählt sind, daß die Metallocen-Verbindung keine $C_s$-Symmetrie bezüglich der Ebene Zentroid-M-Zentroid besitzt.

Besonders bevorzugt werden Katalysatoren der Formel IIIa eingesetzt, worin $R^{37}$ und $R^{38}$ gemeinsam eine $C_1$-$C_{20}$-Alkylenbrücke bilden, insbesondere eine alkylsubstituierte oder phenylsubstituierte Methylenbrücke,
$R^{33}$, $R^{34}$, $R^{35}$ und $R^{36}$ für Wasserstoff stehen,
$R^{39}$ und $R^{312}$ unabhängig voneinander aus der Gruppe ausgewählt sind, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, und
$R^{310}$ und $R^{311}$ verschieden sind und aus der Gruppe ausgewählt sind, die aus Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können.

Ganz besonders bevorzugt eingesetzte Metallocen-Verbindungen entsprechen der Formel (IV):

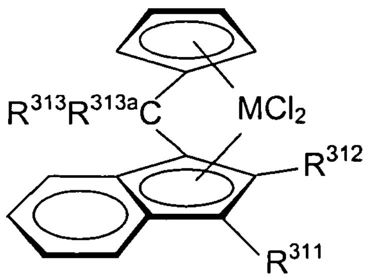

(IV)

wobei
M für ein Metall der Gruppe IIIb, IVb, Vb und VIb des Periodensystems der Elemente steht, bevorzugt für ein Metall der Gruppe IV und ganz besonders bevorzugt für Zirkonium,
$R^{313}$ und $R^{313a}$ unabhängig voneinander aus der Gruppe ausgewählt werden, die aus Wasserstoff, $C_1$-$C_4$-Alkyl oder Aryl, insbesondere aus Wasserstoff, Methyl und Phenyl besteht, wobei vorzugsweise mindestens einer der Reste $R^{313}$ oder $R^{313a}$ nicht Wasserstoff ist,
$R^{311}$ aus der Gruppe ausgewählt wird, die aus Wasserstoff, $C_1$-$C_4$ Alkyl und Aryl, vorzugsweise aus Methyl, Ethyl, Isopropanyl, tert.-Butyl und Phenyl, besteht und
$R^{312}$ aus der Gruppe ausgewählt wird, die aus Wasserstoff und $C_1$-$C_4$ Alkyl, vorzugsweise aus Wasserstoff und Methyl, besteht.

Verbindungen der Formel IV, worin mindestens einer der Reste $R^{311}$, $R^{312}$, $R^{313}$ oder $R^{313a}$ Aryl, vorzugsweise Phenyl bedeutet, oder worin $R^{311}$ oder $R^{312}$ tert. Butyl bedeuten, sind neu und sind ebenfalls Gegenstand der vorliegenden Erfindung. Die Arylsubstituenten enthaltenden Verbindungen zeichnen sich durch eine hohe Stabilität der Komplexe aus, welche eine lange Aktivität während der Copolymerisation gewährleisten.

Beispiele für ebenfalls besonders bevorzugt eingesetzte Metallocen-Katalysatoren sind die im Folgenden aufgeführten Verbindungen der Formeln (1) bis (7):

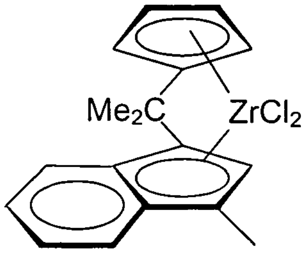

(1)

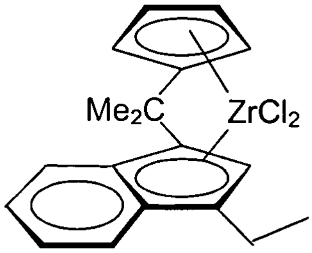

(2)

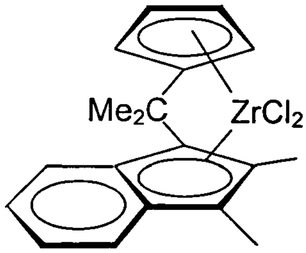

(6)

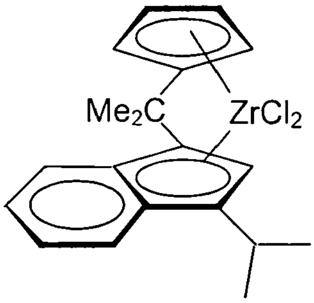

(3)

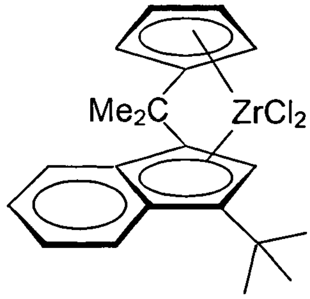

(4)

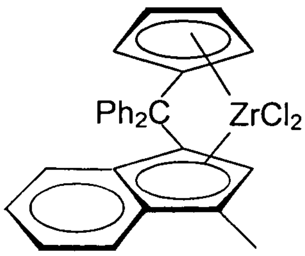

(5)

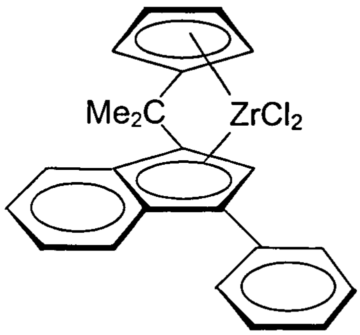

(7)

In den erfindungsgemäßen Verfahren wird als Cokatalysator bevorzugt ein Aluminoxan eingesetzt, welches vorzugsweise die Formel VIa für den linearen Typ und/oder die Formel VIb für den cyclischen Typ aufweist,

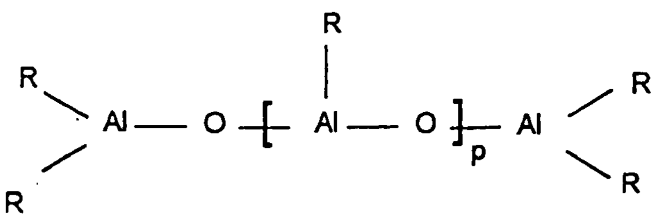

(VIa),

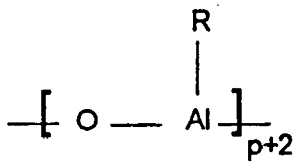

(VIb)

wobei in den Formeln VIa und VIb die Reste R gleich oder verschieden sind und eine $C_1$-$C_6$-Alkylgruppe, eine $C_6$-$C_{18}$-Arylgruppe, Benzyl oder Wasserstoff bedeuten und n eine ganze Zahl von 2 bis 50, bevorzugt 10 bis 35 bedeutet. Bevorzugt sind die Reste R gleich und bedeuten Methyl, Isobutyl, Phenyl oder Benzyl, besonders bevorzugt Methyl.

Sind die Reste R verschieden, so sind sie bevorzugt Methyl und Wasserstoff oder alternativ Methyl und Isobutyl, wobei Wasserstoff oder Isobutyl bevorzugt mit einen zahlenmäßigen Anteil von 0,01 bis 40% (der Reste R) enthalten sind.

Das Aluminoxan kann auf verschiedene Arten nach bekannten Verfahren hergestellt werden. Eine der Methoden ist beispielsweise, daß eine Aluminiumkohlenwasserstoffverbindung und/oder eine Hydridoaluminiumkohlenwasserstoffverbindung mit Wasser (gasförmig, fest, flüssig oder gebunden, beispielsweise als Kristallwasser) in einem inerten Lösungsmittel (wie Toluol) umgesetzt wird. Zur Herstellung eines Aluminoxans mit verschiedenen Alkylgruppen R werden entsprechend der ge-wünschten Zusammensetzung zwei verschiedene Aluminiumtrialkyle ($AlR'_3$ + $AlR''_3$) mit Wasser umgesetzt (S. Pasynkiewicz, Polyhedron 9 (1990) 429, EP-A-302 424). Die genaue räumliche Struktur der Aluminoxane ist nicht bekannt.

Unabhängig von der Art der Herstellung ist allen Aluminoxanlösungen ein wechselnder Gehalt an nicht umgesetzter Aluminiumausgangsverbindung, die in freier Form oder als Addukt vorliegt gemeinsam. Es ist auch möglich, das Aluminoxan auf einen Träger aufzubringen und es dann als Suspension in geträgerter Form einzusetzen. Es sind mehrere Trägerungsverfahren bekannt, z.B. aus EP-A-578,838. Kieselgel kann als Träger verwendet werden.

Es ist möglich, das für das erfindungsgemäße Verfahren zu verwendende Metallocen vor dem Einsatz in der Polymerisationsreaktion mit einem Cokatalysator, insbesondere einem Aluminoxan vorzuaktivieren. Dadurch wird die Polymerisationsaktivität deutlich erhöht.

Die Voraktivierung der Übergangsmetallverbindung wird in Lösung vorgenommen. Bevorzugt wird dabei das Metallocen in einer Lösung des Aluminoxans in einem inerten Kohlenwasserstoff aufgelöst. Als inerter Kohlenwasserstoff eignet sich ein aliphatischer oder aromatischer Kohlenwasserstoff. Bevorzugt wird Toluol verwendet.

Die Konzentration des Aluminoxans in der Lösung liegt im Bereich von ca. 1 Gew.-% bis zur Sättigungsgrenze, vorzugsweise von 5 bis 30 Gew.-%, jeweils bezogen auf die Gesamtlösung. Das Metallocen kann in der gleichen Konzentration eingesetzt werden, vorzugsweise wird es jedoch in einer Menge von $10^{-4}$ bis 1 mol pro mol Aluminoxan eingesetzt. Die Voraktivierungszeit beträgt 5 Minuten bis 60 Stunden, vorzugsweise 5 bis 60 Minuten. Man arbeitet bei einer Temperatur von -78 bis 100°C, vorzugsweise 0 bis 70 °C.

Mit Hilfe des Metallocens kann eine Vorpolymerisation erfolgen. Zur Vorpolymerisation wird bevorzugt das (oder eines der) in der Polymerisation eingesetzte(n) Olefin(e) verwendet.

Das Metallocen kann auch auf einen Träger aufgebracht werden. Geeignete Träger sind beispielsweise Silikagele, Aluminiumoxide, festes Aluminoxan oder andere anorganische Trägermaterialien. Ein geeignetes Trägermaterial ist auch ein Polyolefinpulver in feinverteilter Form.

Eine weitere mögliche Ausgestaltung des erfindungsgemäßen Verfahrens besteht darin, daß man an Stelle oder neben einem Aluminoxan eine salzartige Verbindung der Formel $R^{3'}_xNH_{4-x}BR^{4'}_4$ oder der Formel $R^{3'}_3PHBR^{4'}_4$ als Cokatalysator verwendet. Dabei sind x = 1, 2 oder 3, $R^{3'}$ = Alkyl oder Aryl, gleich oder verschieden, und $R^{4'}$ = Aryl, das auch fluoriert oder teilfluoriert sein kann. In diesem Fall besteht der Katalysator aus dem Reaktionsprodukt eines Metallocens mit einer der genannten Verbindungen (EP-A-277 004).

Falls dem Reaktionsgemisch Lösemittel zugesetzt wird, dann können gebräuchliche inerte Lösemittel, wie aliphatische oder cycloaliphatische Kohlenwasserstoffe, Benzin- bzw. hydrierte Dieselölfraktionen oder Toluol, dazu verwendet werden.

Das Metallocen wird bevorzugt in einer Konzentration, bezogen auf das Übergangsmetall, von $10^{-1}$ bis $10^{-8}$ mol, vorzugsweise $10^{-2}$ bis $10^{-7}$ mol, besonders bevorzugt von $10^{-3}$ bis $10^{-7}$ mol Übergangsmetall pro $dm^3$ Reaktorvolumen angewendet. Das Aluminoxan wird in einer Konzentration von $10^{-4}$ bis $10^{-1}$, vorzugsweise $10^{-4}$ bis $2*10^{-2}$ mol pro $dm^3$ Reaktorvolumen verwendet, bezogen auf den Gehalt an Aluminium. Prinzipiell sind aber auch höhere Konzentrationen möglich.

Die erfindungsgemäß hergestellten Copolymerisate zeichnen sich durch eine neue Mikrostruktur aus. Diese Copolymerisate können zur Herstellung von Formkörpern beliebiger Art eingesetzt werden. Beliebige Formgebungsverfahren können dabei zur Anwendung kommen, beispielsweise Spritzguss, Spritzblasen oder Extrusion.

Insbesondere werden die erfindungsgemäßen Copolymerisate zur Herstellung von Folien, optischen Bauteilen oder von transparenten Behältern eingesetzt. Die Folien kommen vorzugsweise als optische Folien, als Blisterfolien,

oder als anderweitige Verpackungsfolien zum Einsatz. Im Bereich der optischen Bauteile sind vorzugsweise Linsen, Prismen und Lichtleiterplatten, oder in der Diagnostik zu verwendende Mikrotiterplatten zu nennen. Die transparenten Behälter kommen vorzugsweise in der Medizintechnik zum Einsatz, beispielsweise als Spritzenkörper.

Die folgenden Beispiele erläutern die Erfindung. Eine Begrenzung ist dadurch nicht beabsichtigt.

Die in Polymerisationsexperimenten eingesetzten Metallocene wurden nach allgemeinen in der Literatur beschriebenen Synthesemethoden hergestellt. Aufgrund der Luft- und Feuchtigkeitsempfindlichkeit metallorganischer Verbindungen wurden alle Arbeiten unter Argon-Schutzgasatmosphäre mittels Schlenktechnik in abgeschlossenen Apparaturen mit Überdruckventilen durchgeführt. Die Glasgeräte wurden vor Gebrauch evakuiert und mit Schutzgas gespült. Filtrationen erfolgten über geschlossene G3-Fritten mittels Schutzgasüberdruck. Bei den Filtrationen der Katalysatorsynthesen wurde zusätzlich eine Celite®-Schicht (ca. 3 cm) aufgebracht, um eine ungehinderte Filtration zu gewährleisten. Als Inertgas wurde Argon der Firma Messer mit einem Reinheitsgrad von 99,998 % verwendet.

Als typisches Beispiel für die Herstellung der verwendeten Metallocene soll die Synthese der Verbindung (5) ($[Ph_2C(Cp)(3\text{-MeInd})]ZrCl_2$) beschrieben werden.

Synthese von 1-Methylinden / 3-Methylinden:

In einem 500-ml-Vierhalskolben mit Tropftrichter wurden zu einer Lösung von 45,0 g Inden (0,35 mol) in 200 ml THF bei 0 °C innerhalb von 30 min 140 ml (0,35 mol) einer 2,5 M Lösung von n-Butyllithium in Toluol zugetropft. Diese Lösung wurde nach Erwärmen auf Raumtemperatur für eine weitere Stunde gerührt. Anschließend wurde erneut auf 0 °C abgekühlt und 99,4 g (0,70 mol) Iodmethan innerhalb von 2 h zugetropft. Nach Erwärmen auf Raumtemperatur wurde für weitere 24 h gerührt. Die Lösungsmittel wurden am Rotationsverdampfer bei 40 °C Badtemperatur und 100 mbar abdestilliert. Der schwarze Rückstand wurde dreimal mit je 200 ml Pentan ausgeschüttelt. Nach Einengen der vereinigten Pentanfraktionen am Rotationsverdampfer wurde das Rohprodukt über eine 25 cm Vigreuxkolonne fraktioniert. Es wurden im Membranpumpenvakuum bei 19 mbar und einer Kopftemperatur von 71 - 73 °C 28,6 g (0,22 mol; 63 % Ausbeute) farbloses Methylinden erhalten. Das $^1H$-NMR-Spektrum zeigt ein Isomerengemisch des 1- und 3-Methylindens im Verhältnis von ungefähr 1 : 1.

$^1H$-NMR ($CDCl_3$, TMS, $\delta$(ppm)): 7,44-7,16 (4 H, m, aromatische Protonen); 6,76 (1 H, dd, olefinisches Proton am $C_5$-Ring; 1-Methylinden); 6,46 (1 H, dd, olefinisches Proton am $C_5$-Ring; 1-Methylinden); 6,18 (1 H, m, olefinisches Proton am $C_5$-Ring; 3-Methylinden); 3,47 (1 H, m, aliphatisches Proton am $C_5$-Ring; 1-Methylinden); 3,29 (2 H, m, aliphatische Protonen am $C_5$-Ring; 3-Methylinden); 2,16 (3 H, m, $-C\underline{H}_3$ ;3-Methylinden); 1,30 (3 H, d, $-C\underline{H}_3$ ;1-Methylinden).

Synthese von 6,6-Diphenylfulven:

In einem 500-ml-Vierhalskolben wurden bei 50 °C 78,0 g (0,24 mol) Natriumethylat-Lösung vorgelegt und anschließend 45,6 g (0,25 mol) Benzophenon zugegeben. Nach vollständiger Lösung wurden 20 g (0,30 mol) frisch destilliertes Cyclopentadien innerhalb von 30 min bei 45 - 50 °C zugetropft. Nach Beendigung der Zugabe wurde noch 2 h bei Raumtemperatur gerührt, wobei eine dunkelrote Suspension entstand. Diese wurde über eine G3-Fritte filtriert und der Feststoff viermal mit je 25 ml Ethanol gewaschen. Nach Trocknen im Ölpumpenvakuum wurden 47,1 g (0,20 mol; 82 % Ausbeute) rotes 6,6-Diphenylfulven erhalten.

$^1H$-NMR ($CDCl_3$, TMS, $\delta$(ppm)): 7,42-7,32 (10 H, m, aromatische Protonen); 6,62 (2 H, m, olefinische Protonen); 6,32 (2 H, m, olefinische Protonen).

Synthese von 1-(Cyclopenta-1,3-dienyl-diphenyl-methyl)-3-methyl-1*H*-inden:

In einem 250-ml-Vierhalskolben mit Tropftrichter wurden zu einer Lösung von 10,2 g (78,3 mmol) 1-Methylinden / 3-Methylinden in 100 ml Diethylether bei 0 °C innerhalb von 5 min 31,4 ml (78,3 mmol) einer 2,5 M Lösung von n-Butyllithium in Toluol zugetropft. Diese Lösung wurde nach Erwärmen auf Raumtemperatur für eine weitere Stunde gerührt. Anschließend wurde erneut auf 0 °C abgekühlt und eine Lösung von 18,0 g (78,3 mmol) 6,6-Diphenylfulven in 10 ml Diethylether innerhalb von 10 min zugetropft. Es wurde 3 h bei Raumtemperatur nachgerührt. Die beige Suspension wurde auf Eiswasser / 5,9 g (1 eq) Eisessig gegossen. Die Phasen wurden getrennt und die wässrige Phase dreimal mit je 30 ml Diethylether extrahiert. Die vereinigten organischen Phasen wurden dreimal mit je 30 ml Wasser und einmal mit 30 ml gesättigter Natriumchloridlösung gewaschen und über Magnesiumsulfat getrocknet. Nach Entfernen der Lösungsmittel am Rotationsverdampfer wurde das gelbe Öl über Nacht bei -20 °C gelagert. Nach Animpfen kristallisierten weiße Kristalle aus, die in 10 ml Pentan von ca. 0 °C suspendiert und über eine Fritte abgesaugt wurden. Nach Trocknen im Ölpumpenvakuum wurden 15,5 g (43,0 mmol; 55 % Ausbeute) weißes Pulver (Ligandverbindung) erhalten. Das $^1H$-NMR-Spektrum zeigt ein Isomerengemisch des 1-(Cyclopenta-1,3-dienyl-diphenyl-methyl)-3-methyl-1*H*-inden und des 1-(Cyclopenta-1,4-dienyl-diphenyl-methyl)-3-methyl-1*H*-inden.

$^1H$-NMR ($CDCl_3$, TMS, $\delta$(ppm)): 7,45-6,89 (14 H, m, aromatische Protonen, breit); 6,43-6,16 (4 H, m, olefinische Protonen

an den $C_5$-Ringen, breit); 4,87 (1 H, m, Methinproton am Inden); 3,04 (2 H, s, Methylenprotonen am Cp); 1,86 (3H, m, -C$\underline{H}_3$).

Synthese der Verbindung (5) ([$Ph_2C(Cp)(3\text{-MeInd})]ZrCl_2$):

In einem 100-ml-Dreihalskolben wurden zu einer Lösung von 3,6 g (10 mmol) von 1-(Cyclopenta-1,3-dienyl-diphenyl-methyl)-3-methyl-1*H*-inden in 50 ml Toluol / 3,2 ml (40 mmol) THF innerhalb von 2 min 8,4 ml (21 mmol) einer 2,5 M Lösung von n-Butyllithium in Toluol bei 0 °C zugetropft. Die orangene Lösung wurde 2 h bei 50 °C gerührt. Nach Abkühlen auf 0 °C wurden 2,3 g (10 mmol) Zirkoniumtetrachlorid in einer Portion zugegeben. Nach Erwärmen auf Raumtemperatur wurde die rote Suspension für weitere 3 h nachgerührt. Diese Suspension wurde in 200 ml 80°C warmes Toluol gegossen. Es wurde 5 min gerührt, die Suspension über eine G3-Fritte mit Celiteschicht filtriert und der Filterrückstand dreimal mit je 20 ml 80 °C warmem Toluol gewaschen. Die vereinigten Filtrate wurden im Vakuum auf ca. 150 ml eingeengt und über Nacht bei -20 °C stehen gelassen. Der auskristallisierte Feststoff wurde über eine G3-Fritte abfiltriert und mit wenig kaltem Toluol gewaschen. Nach Trocknen im Ölpumpenvakuum wurden 4,1 g (6,33 mmol, 63 % Ausbeute, berechnet ohne Toluol) orangenes [$Ph_2C(Cp)(3\text{-MeInd})]ZrCl_2$ erhalten. Das Metallocen enthielt noch 58 mol-% Toluol.
$^1$H-NMR ($CDCl_3$, δ(ppm)): 7,83-6,66; 6,23 (14 H, m, Protonen am $C_6$-Ring); 6,56-6,50; 5,52-5,47 (5 H, m, Protonen an den $C_5$-Ringen); 2,39 (3 H, s, -C$\underline{H}_3$).

Beispiele 1-51

Alle Polymerisationsexperimente wurden nach der im folgenden beschriebenen Vorschrift in einem 1,5 L Stahlautoklaven durchgeführt. Der maximal zulässige Betriebsinnendruck betrug 25 bar. Die Thermostatisierung erfolgte mit einer Umlaufpumpe mittels Heißdampf und Brauchwasser. Zur Durchmischung diente ein über eine Magnetkupplung indirekt angetriebener Kreuzbalkenrührer. Polymerisiert wurde bei 70°C in Toluol als Lösungsmittel. Die Rührgeschwindigkeit betrug 850 U/min.

Die zur Polymerisation nötige Metallocenmenge wurde so berechnet, dass 20 bis 30 g Polymer zu erwarten waren. Zur Herstellung der Katalysatorlösung wurden in der Regel ungefähr 10 mg Metallocen genau eingewogen und in der betragsmäßig gleichen Millilitermenge an Methylaluminoxan (=MAO) (10 Gew.% MAO in Toluol) gelöst. Mit einer Spritze wurde die benötigte Menge Katalysatorlösung entnommen und mit MAO-Lösung auf 5 ml aufgefüllt. Bei sehr schwach aktiven Katalysatorsystemen wurde das Metallocen direkt eingewogen und in 5 ml MAO gelöst. Damit betrug die insgesamt eingesetzte Menge an Methylaluminoxan in jedem Beispiel 1,34 g MAO (21,4mmol Al).

Vor jeder Polymerisation wurde der Autoklav mit 1 L Exxsol® und 10 ml MAO-Lösung bei 90 °C ausgekocht. Das Norbornen wurde im Argongegenstrom in den Autoklaven gefüllt und mit 10 ml MAO-Lösung versetzt. Nach dem Thermostatisieren des Comonomers auf die gewünschte Reaktionstemperatur wurde die Katalysatorlösung mittels einer Spritze zugegeben. Unter Rühren wurde der benötigte Ethendruck aufgepresst und über einen Druckminderer während der gesamten Reaktionszeit konstant gehalten. Der Verbrauch an Ethen wurde über einem Durchflussmesser verfolgt. Das Reaktionsvolumen betrug 600 ml und die Reaktionszeit 15 min.

Nach der Polymerisation wurde die Ethenzufuhr unterbrochen und der Überdruck abgelassen. Die Reaktionslösung wurde in eine Schraubdeckelflasche überführt und mit ungefähr 300 ml Toluol verdünnt. Zur Ausfällung des Copolymers wurde sie langsam unter heftigem Rühren (Ultra-Turrax®) in ca. 1 L Aceton eingerührt und mit 3 ml Salzsäure 37% versetzt. Das ausgefallene Copolymer wurde über einen Büchnertrichter abfiltriert und erneut mit Aceton und Wasser gewaschen. Die Trocknung erfolgte über Nacht bei 60 °C im Vakuumtrockenschrank.

In den Polymerisationsexperimenten wurden die folgenden Metallocene als Katalysatoren eingesetzt:

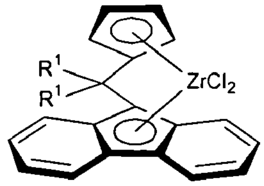

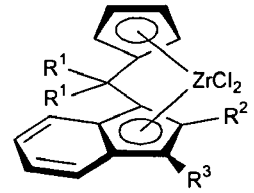

(V1) $R^1$ = Me ([$Me_2C(Cp)(Fluo)]ZrCl_2$)
(V2) $R^1$ = Ph ([$Ph_2C(Cp)(Fluo)]ZrCl_2$)

(1) $R^1$=Me $R^2$ = H $R^3$ = Me ([$Me_2C(Cp)(3\text{-MeInd})]ZrCl_2$)
(2) $R^1$ = Me $R^2$ = H $R^3$ = Et ([$Me_2C(Cp)(3\text{-EtInd})]ZrCl_2$)
(3) $R^1$ = Me $R^2$ = H $R^3$ = iPr ([$Me_2C(Cp)(3\text{-iPrInd})]ZrCl_2$)

(fortgesetzt)

(4) $R^1$ = Me $R^2$ = H $R^3$ = tBu ($[Me_2C(Cp)(3\text{-tBuInd})]ZrCl_2$)
(5) $R^1$ = Ph $R^2$ = H $R^3$ = Me ($[Ph_2C(Cp)(3\text{-Meind})]ZrCl_2$)
(6) $R^1$ = Me $R^2$ = Me $R^3$ = Me ($[Me_2C(Cp)(2,3\text{-}Me_2Ind)]ZrCl_2$)
(7) $R^1$ = Me $R^2$ = H $R^3$ = Ph ($[Me_2C(Cp)(3\text{-PhInd})]$

Nach diesen Beispielen erhaltene Polymere wurden $^{13}$C-NMR-spektroskopisch vermessen. Die Messungen erfolgten an einem DMX 500 NMR-Spektrometer der Firma Bruker bei 353 K. Dazu wurden 200 bis 300 mg Polymer in 3 ml 1,1,2,2-Tetrachlorethan-d2 bei erhöhter Temperatur in einem 10-mm-NMR-Röhrchen gelöst. Um integrierbare $^{13}$C-NMR-Spektren zu erhalten wurde mit dem Inverse Gated Decoupling-Verfahren gemessen. Spin-Gitter-Relaxation und Kern-Overhauser-Effekt (NOE) haben dann keinen Einfluß mehr auf die Signalintensitäten. Die chemische Verschiebung wurde auf 1,1,2,2-Tetrachlorethan bei 74,24 ppm bezogen. Die Auswertung der Spektren erfolgte mit dem WIN-NMR-Programm der Firma Bruker. Die wichtigsten Parameter sind wie folgt zusammengefasst:

| | |
|---|---|
| Messfrequenz | 125,75 MHz |
| Messtemperatur | 353 K |
| Sweepweite | 39682 Hz |
| Relaxationszeit | 7,4 s |
| Anzahl der Scans | 5104 |
| Lösungsmittel | $C_2D_2Cl_4$ |

Die Glasübergangstemperaturen wurden mittels Differential Scanning Calorimetry (DSC) mit einem Gerät der Firma Perkin-Elmer (Typ DSC 7) bestimmt. Dazu wurden 4 - 6 mg des Polymers in einem Aluminiumpfännchen eingewogen und in einem Temperaturintervall von -10 °C bis wahlweise zwischen 200 bis 300 °C aufgeschmolzen. Die Glastemperaturen wurden aus den Messungen der zweiten Aufheizkurve bestimmt. Die Aufheiz- und Abkühlrate betrug 20 K/min.

Die reduzierten Viskositäten (Viskositätszahlen) der Polymere wurden mit einem Ubbelohde-Viskosimeter (Kapillare 0a) bestimmt. Hierzu wurde die dynamische Viskosität des Lösungsmittels sowie der Polymerlösung bestimmt. Die Konzentration der Polymerlösung betrug 500 mg Polymer in 100 ml Decalin (bei 135 °C), der Korrekturfaktor für die Umrechnung auf das Volumen des Decalins bei Raumtemperatur beträgt 0,9. Dem Decalin wurden zur Thermostabilisierung 1 g/L Irganox 1010® zugesetzt. Die Messung erfolgte mit dem Prozessor-Viskositätsmeßsystem PVS 1 (Version 2.45) der Firma Lauda bei 135 °C.

$$\eta_{red} = \left(\frac{\eta}{\eta_0} - 1\right) \cdot \frac{1}{c}$$

Hierin bedeuten:

$\eta_{red}$ reduzierte Viskosität (Viskositätszahl) in ml/g

$\eta$ dynamische Viskosität der Lösung in mPa·s

$\eta_0$ dynamische Viskosität des Lösungsmittels in mPa·s

*c* Konzentration in g/ml

Die ergänzenden Versuchsbedingungen sowie Ergebnisse der Polymerisationsexperimente sind in den nachfolgenden Tabellen aufgeführt. Für einzelne Beispiele sind Spektren in den beiliegenden Figuren gezeigt.

Es zeigen:

Figur 1: $^{13}$C-NMR-Spektren der mit den Metallocenen (V1), (V2), (5), und (7) jeweils in Kombination mit MAO

hergestellten Ethen/Norbornen-Copolymere ($X_N \approx 0,53$)

Figur 2: $^{13}C$-NMR-Spektren von Ethen/Norbornen-Copolymeren mit unterschiedlichem Norbornengehalt hergestellt mit dem System $[Me_2C(Cp)(3\text{-}PhInd)]ZrC12$ (7) / MAO

Figur 3: $^{13}C$-NMR-Spektren von Ethen/Norbornen-Copolymeren mit unterschiedlichem Norbornengehalt hergestellt mit dem System $[Ph_2C(Cp)(Flu)]ZrCl_2$ (V2) / MAO

Figur 4: $^{13}C$-NMR-Spektrum eines Ethen/Norbornen-Copolymers ($X_N$ = 0,67) hergestellt mit dem System $[Me_2C(Cp)(3\text{-}MeInd)]ZrCl_2$ (1) / MAO

Figur 5: $^{13}C$-NMR-Spektrum eines Ethen/Norbornen-Copolymers ($X_N$ = 0,67) hergestellt mit dem System $[Me_2C(Cp)(3\text{-}iPrInd)]ZrCl_2$ (3) / MAO

Figur 6: $^{13}C$-NMR-Spektrum eines Ethen/Norbornen-Copolymers ($X_N$ = 0,67) hergestellt mit dem System $[Ph_2C(Cp)(3\text{-}MeInd)]ZrCl_2$ (5) / MAO

Figur 7: $^{13}C$-NMR-Spektrum eines Ethen/Norbornen-Copolymers ($X_N$ = 0,66) hergestellt mit dem System $[Me_2C(Cp)(2,3\text{-}Me_2Ind)]ZrCl_2$ (6) / MAO

Tabelle 1

| Beispiel Nr. | Metallocen | Met. [mg] | Met. [μmol] | Al/Zr | c(Nb) [mol/L] | p(Ethen) [bar] | COC [g] | Aktivität [kg(COC) / (mmol(Zr) h)] |
|---|---|---|---|---|---|---|---|---|
| 1 | **1** | 0,5 | 1,261 | 16970 | 5,6 | 19 | 32,3 | 102 |
| 2 | | 0,5 | 1,261 | 16970 | 7,8 | 19 | 21,0 | 87 |
| 3 | | 1 | 2,522 | 8490 | 7,8 | 10 | 2,1 | 58 |
| 4 | | 2 | 5,044 | 4240 | 7,8 | 6 | 2,1 | 34 |
| 5 | | 8 | 20,176 | 1060 | 7,8 | 2 | 16,2 | 3 |
| 6 | | 13,6 | 34,299 | 624 | 7,8 | 1 | 14,5 | 2 |
| 7 | **2** | 0,5 | 1,218 | 17570 | 5,6 | 19 | 39,8 | 131 |
| 8 | | 0,5 | 1,218 | 17570 | 7,8 | 19 | 32,6 | 107 |
| 9 | | 1 | 2,436 | 8780 | 7,8 | 10 | 25,2 | 41 |
| 10 | | 2 | 4,872 | 4390 | 7,8 | 6 | 24,6 | 20 |
| 11 | **3** | 0,5 | 1,178 | 18170 | 5,6 | 19 | 38,6 | 131 |
| 12 | | 0,5 | 1,178 | 18170 | 7,8 | 19 | 29,4 | 100 |
| 13 | | 1 | 2,356 | 9080 | 7,8 | 10 | 20,8 | 35 |
| 14 | | 3,4 | 8,009 | 2670 | 7,8 | 6,5 | 26,1 | 13 |
| 15 | | 2 | 4,711 | 4540 | 7,8 | 6 | 28,2 | 24 |
| 16 | | 3,2 | 7,538 | 2840 | 7,8 | 1 | 3,2 | 2 |
| 17 | **4** | 1 | 2,280 | 9390 | 5,6 | 19 | 28,5 | 50 |
| 18 | | 2 | 4,560 | 4690 | 7,8 | 19 | 48,6 | 43 |
| 19 | | 3 | 6,841 | 3130 | 7,8 | 10 | 46,7 | 27 |
| 20 | | 2 | 4,560 | 4690 | 7,8 | 6 | 6,7 | 6 |
| 21 | | 8,3 | 18,926 | 1130 | 7,8 | 4 | 31,4 | 7 |
| 22 | | 5 | 11,401 | 1880 | 7,8 | 2 | 1,8 | 0,5 |
| 23 | | 12,2 | 27,819 | 769 | 7,8 | 1 | 2,3 | 0,3 |

(fortgesetzt)

| Beispiel Nr. | Metallocen | Met. [mg] | Met. [μmol] | Al/Zr | c(Nb) [mol/L] | p(Ethen) [bar] | COC [g] | Aktivität [kg(COC) / (mmol(Zr) h)] |
|---|---|---|---|---|---|---|---|---|
| 24 | **5** | 5 | 9,604 | 2230 | 5,6 | 19 | 70,9 | 30 |
| 25 | | 5 | 9,604 | 2230 | 7,8 | 19 | 37,6 | 16 |
| 26 | | 11,1 | 21,321 | 1000 | 7,8 | 10 | 59,8 | 9 |
| 27 | | 2 | 3,842 | 5570 | 7,8 | 6 | 2,5 | 3 |
| 28 | | 10,5 | 20,169 | 1060 | 7,8 | 1 | 8,6 | 2 |
| 29 | **6** | 0,2 | 0,487 | 43940 | 5,6 | 19 | 31,1 | 255 |
| 30 | | 0,2 | 0,487 | 43940 | 7,8 | 19 | 27,1 | 222 |
| 31 | | 0,4 | 0,974 | 21970 | 7,8 | 10 | 25,9 | 106 |
| 32 | | 0,5 | 1,218 | 17580 | 7,8 | 7,5 | 10,0 | 33 |
| 33 | | 0,5 | 1,218 | 17580 | 7,8 | 6 | 17,4 | 57 |
| 34 | | 1 | 2,436 | 8790 | 7,8 | 1 | 3,1 | 5 |
| 35 | **7** | 2 | 4,362 | 4910 | 5,6 | 19 | 33,9 | 32 |
| 36 | | 2 | 4,362 | 4910 | 7,8 | 19 | 24,4 | 30 |
| 37 | | 2 | 4,362 | 4910 | 7,8 | 10 | 19,7 | 18 |
| 38 | | 4 | 8,723 | 2450 | 7,8 | 6 | 18,1 | 8 |
| 39 | | 11,2 | 24,425 | 876 | 7,8 | 2 | 15,0 | 2 |
| 40 | | 16,1 | 35,111 | 609 | 7,8 | 1 | 9,1 | 1 |
| 41 | **V1** | 0,2 | 0,463 | 46220 | 5,6 | 19 | 21,8 | 188 |
| 42 | | 0,3 | 0,694 | 30810 | 7,8 | 19 | 26,9 | 155 |
| 43 | | 0,6 | 1,389 | 15410 | 7,8 | 10 | 42,0 | 121 |
| 44 | | 0,5 | 1,157 | 18490 | 7,8 | 6 | 30,9 | 107 |
| 45 | **V2** | 1 | 1,796 | 11920 | 5,6 | 19 | 41,9 | 93 |
| 46 | | 1 | 1,796 | 11920 | 7,8 | 19 | 32,8 | 73 |
| 47 | | 2 | 3,593 | 5960 | 7,8 | 10 | 42,1 | 47 |
| 48 | | 2 | 3,593 | 5960 | 7,8 | 8 | 35,2 | 39 |
| 49 | | 3,3 | 5,928 | 3610 | 7,8 | 6 | 44,7 | 30 |
| 50 | | 8,5 | 15,270 | 1400 | 7,8 | 2 | 18,8 | 5 |
| 51 | | 13,5 | 24,253 | 882 | 7,8 | 1 | 15,7 | 3 |

Tabelle 2

| Beispiel Nr. | Metallocen | c(N) / c(E) | x(N) | X(N) (NMR) | X(N) (DSC) | T(g) [°C] | η(red) [ml/g] |
|---|---|---|---|---|---|---|---|
| 1 | **1** | 2,4 | 0,71 | - | 0,36 | 90,7 | 60,2 |
| 2 | | 3,4 | 0,77 | - | 0,40 | 99,3 | 50,0 |
| 3 | | 6,9 | 0,87 | - | 0,47 | 135,2 | 60,2 |
| 4 | | 12,1 | 0,92 | 0,52 | 0,52 | 154,6 | 64,0 |
| 5 | | 40,9 | 0,98 | 0,64 | 0,62 | 196,7 | 67,0 |
| 6 | | 88,1 | 0,99 | 0,67 | 0,67 | 214,7 | 58,8 |
| 7 | **2** | 2,4 | 0,71 | - | 0,35 | 85,5 | 44,7 |
| 8 | | 3,4 | 0,77 | - | 0,40 | 106,5 | 49,6 |
| 9 | | 6,9 | 0,87 | - | 0,47 | 135,0 | 57,0 |
| 10 | | 12,1 | 0,92 | 0,53 | 0,52 | 154,5 | 62,0 |

(fortgesetzt)

| Beispiel Nr. | Metallocen | c(N) / c(E) | x(N) | X(N) (NMR) | X(N) (DSC) | T(g) [°C] | η(red) [ml/g] |
|---|---|---|---|---|---|---|---|
| 11 | **3** | 2,4 | 0,71 | - | 0,32 | 73,9 | 77,5 |
| 12 | | 3,4 | 0,77 | - | 0,38 | 98,7 | 76,2 |
| 13 | | 6,9 | 0,87 | - | 0,47 | 133,3 | 82,4 |
| 14 | | 11,0 | 0,92 | 0,52 | 0,52 | 154,9 | 87,7 |
| 15 | | 12,1 | 0,92 | - | 0,54 | 161,2 | 79,3 |
| 16 | | 88,1 | 0,99 | 0,61 | 0,65 | 208,7 | 60,3 |
| 17 | **4** | 2,4 | 0,71 | - | 0,19 | 20,8 | 86,0 |
| 18 | | 3,4 | 0,77 | - | 0,25 | 43,8 | 90,4 |
| 19 | | 6,9 | 0,87 | - | 0,35 | 84,1 | 78,3 |
| 20 | | 12,1 | 0,92 | - | 0,40 | 105,3 | 60,1 |
| 21 | | 18,9 | 0,95 | 0,46 | 0,45 | 124,5 | 64,8 |
| 22 | | 40,9 | 0,98 | 0,52 | 0,52 | 154,9 | 48,3 |
| 23 | | 88,1 | 0,99 | - | 0,58 | 179,3 | 37,9 |
| 24 | **5** | 2,4 | 0,71 | - | 0,38 | 98,2 | 44,9 |
| 25 | | 3,4 | 0,77 | - | 0,43 | 119,7 | 45,9 |
| 26 | | 6,9 | 0,87 | 0,52 | 0,52 | 153,2 | 53,7 |
| 27 | | 12,1 | 0,92 | - | 0,56 | 172,6 | 57,2 |
| 28 | | 88,1 | 0,99 | 0,66 | 0,67 | 215,8 | 53,8 |
| 29 | **6** | 2,4 | 0,71 | - | 0,37 | 94,8 | 71,8 |
| 30 | | 3,4 | 0,77 | - | 0,42 | 111,6 | 83,8 |
| 31 | | 6,9 | 0,87 | - | 0,49 | 141,6 | 94,2 |
| 32 | | 9,4 | 0,90 | 0,51 | 0,51 | 152,3 | 95,4 |
| 33 | | 12,1 | 0,92 | - | 0,54 | 161,7 | 99,7 |
| 34 | | 88,1 | 0,99 | 0,66 | 0,66 | 211,8 | 99,0 |
| 35 | **7** | 2,4 | 0,71 | - | 0,35 | 84,1 | 20,7 |
| 36 | | 3,4 | 0,77 | - | 0,38 | 98,9 | 22,6 |
| 37 | | 6,9 | 0,87 | - | 0,46 | 131,0 | 27,7 |
| 38 | | 12,1 | 0,92 | 0,53 | 0,53 | 157,2 | 31,1 |
| 39 | | 40,9 | 0,98 | 0,64 | 0,63 | 198,4 | 31,5 |
| 40 | | 88,1 | 0,99 | 0,66 | 0,66 | 212,4 | 29,7 |
| 41 | **V1** | 2,4 | 0,71 | - | 0,37 | 91,5 | 152,4 |
| 42 | | 3,4 | 0,77 | - | 0,41 | 109,7 | 164,5 |
| 43 | | 6,9 | 0,87 | - | 0,48 | 138,3 | 180,4 |
| 44 | | 12,1 | 0,92 | 0,54 | 0,53 | 158,2 | 181,3 |
| 45 | **V2** | 2,4 | 0,71 | - | 0,36 | 90,4 | 338,6 |
| 46 | | 3,4 | 0,77 | - | 0,43 | 117,4 | 364,1 |
| 47 | | 6,9 | 0,87 | - | 0,50 | 146,8 | 297,0 |
| 48 | | 8,8 | 0,90 | 0,53 | 0,52 | 155,8 | 263,3 |
| 49 | | 12,1 | 0,92 | - | 0,55 | 171,3 | 207,9 |
| 50 | | 40,9 | 0,98 | 0,60 | 0,63 | 198,3 | 149,7 |
| 51 | | 88,1 | 0,99 | 0,65 | 0,66 | 210,2 | 102,1 |

Tabelle 3: Stoffmengenanteil Norbornen in den unterschiedlichen Norbornenblöcken

| Beispiel Nr. | Metallocen | X(N) in N aus C7 | X(N) in NN aus C7 | X(N) in NNN aus C7 | X(N) in NNN aus C1/C4 | ΣX(N) aus C7 | ΣX(N) aus Gesamt-NMR |
|---|---|---|---|---|---|---|---|
| 4 | 1 | 0,285 | 0,203 | 0,039 | 0,041 | 0,527 | 0,522 |
| 10 | 2 | 0,286 | 0,216 | 0,037 | 0,028 | 0,539 | 0,534 |
| 14 | 3 | 0,242 | 0,266 | 0,009 | 0,010 | 0,517 | 0,515 |
| 22 | 4 | 0,234 | 0,280 | - | - | 0,514 | 0,518 |
| 26 | 5 | 0,249 | 0,250 | 0,034 | 0,036 | 0,533 | 0,521 |
| 32 | 6 | 0,272 | 0,229 | 0,024 | 0,028 | 0,525 | 0,526 |
| 38 | 7 | 0,233 | 0,247 | 0,050 | 0,055 | 0,530 | 0,528 |
| 44 | V1 | 0,269 | 0,264 | - | - | 0,533 | 0,536 |
| 48 | V2 | 0,238 | 0,298 | - | - | 0,536 | 0,532 |

**Patentansprüche**

**1.** Verfahren zur Herstellung von Cycloolefin-Copolymeren durch Polymerisation von

a) mindestens einem Cycloolefin der allgemeinen Formel (I)

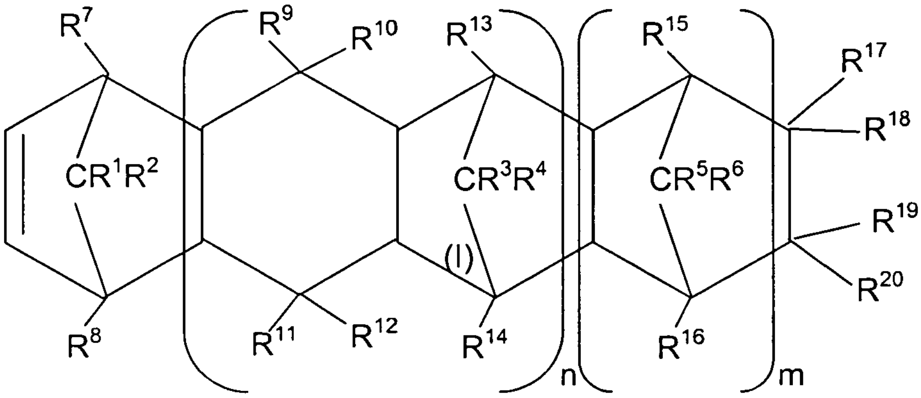

(I)

in der

- n für 0 oder 1 steht,
- m für 0 oder eine positive ganze Zahl steht,
- $R^1$, $R^2$, $R^3$, $R^4$, $R^5$, $R^6$ unabhängig voneinander aus der Gruppe ausgewählt werden, die aus Wasserstoff, Halogen, cyclischen und nicht cyclischen, verzweigten und unverzweigten aliphatischen Kohlenwasserstoffgruppen, aromatischen Kohlenwasserstoffgruppen, und Alkoxygruppen besteht,
- $R^7$, $R^8$, $R^9$, $R^{10}$, $R^{11}$, $R^{12}$, $R^{13}$, $R^{14}$, $R^{15}$, $R^{16}$ unabhängig voneinander aus der Gruppe ausgewählt werden, die aus Wasserstoff und aliphatischen Kohlenwasserstoffgruppen besteht,
- $R^{17}$, $R^{18}$, $R^{19}$, $R^{20}$ unabhängig voneinander aus der Gruppe ausgewählt sind, die aus Wasserstoff, Halogenen und aliphatischen Kohlenwasserstoffgruppen besteht,
- wobei $R^{17}$ und $R^{19}$ auch aneinander gebunden sein können, derart daß sie einen einfachen Ring oder ein Ringsystem mit mehreren Ringen bilden, wobei der Ring oder die Ringe gesättigt oder ungesättigt sein können, mit

b) mindestens einem 1-Olefin der Formel (II)

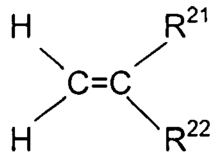

(II)

wobei $R^{21}$ und $R^{22}$ unabhängig voneinander aus der Gruppe ausgewählt sind, die aus Wasserstoff und $C_{1-20}$-Alkylgruppen besteht,
zur Herstellung von Cycloolefin-Copolymeren, wobei das Cycloolefin und das Comonomer in Gegenwart eines Katalysatorsystems zur Polymerisation gebracht werden, das Metallocen-Verbindungen der allgemeinen Formel (III) enthält

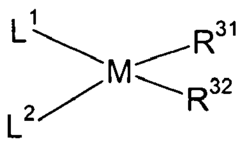

(III),

worin
M für ein Metall der Gruppe IIIb, IVb, Vb und VIb des Periodensystems der Elemente steht,
$R^{31}$ und $R^{32}$ gleich oder verschieden sind und aus der Gruppe ausgewählt werden, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können, und
$L_1$ und $L_2$ unabhängig voneinander für Liganden stehen, die jeweils mindestens einen Cyclopentadienylring enthalten, wobei die Reste $R^{31}$, $R^{32}$, $L_1$ und $L_2$ so ausgewählt sind, daß die Metallocen-Verbindung keine $C_s$-Symmetrie bezüglich der Ebene Zentroid-M-Zentroid besitzt.

2. Verfahren nach Anspruch 1, **dadurch gekennzeichnet, daß** als Metallocenverbindung eine Verbindung der allgemeinen Formel (IIIa) eingesetzt wird,

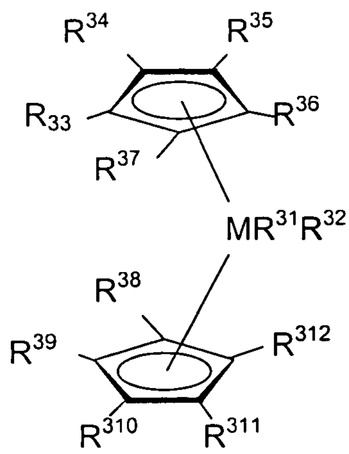

(IIIa),

worin M, $R^{31}$ und $R^{32}$ die in Anspruch 1 definierte Bedeutung besitzen, $R^{33}$, $R^{34}$, $R^{35}$, $R^{36}$, $R^{37}$, $R^{38}$, $R^{39}$, $R^{310}$, $R^{311}$ und $R^{312}$ gleich oder verschieden sind und aus der Gruppe ausgewählt werden, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können, und wobei $R^{37}$ und $R^{38}$ auch eine $C_{1-20}$-Alkylenbrücke bilden können, und ein oder mehrere $\alpha$-substituierte Paare aus der Gruppe $R^{33}$, $R^{34}$, $R^{35}$, $R^{36}$ und $R^{37}$ und aus der Gruppe $R^{38}$, $R^{39}$, $R^{310}$, $R^{311}$ und $R^{312}$ auch gemeinsam eine

verzweigte oder unverzweigte $C_{3-18}$-Alkylgruppe bilden können, derart, daß ein oder mehrere Ringe gebildet werden, und wobei
die Substituenten $R^{33}$, $R^{34}$, $R^{35}$, $R^{36}$, $R^{37}$, $R^{38}$, $R^{39}$, $R^{310}$, $R^{311}$ und $R^{312}$ so ausgewählt sind, daß die Metallocen-Verbindung keine $C_s$-Symmetrie bezüglich der Ebene Zentroid-M-Zentroid besitzt.

3. Verfahren nach einem der Ansprüche 1 bis 2, **dadurch gekennzeichnet, daß** M aus der Gruppe ausgewählt ist, die aus Metallen der Gruppe IV des Periodensystem besteht.

4. Verfahren nach Anspruch 3, **dadurch gekennzeichnet, daß** M für Zirkonium steht.

5. Verfahren nach Anspruch 2, **dadurch gekennzeichnet, daß**
$R^{37}$ und $R^{38}$ gemeinsam eine $C_1$-$C_{20}$-Alkylenbrücke bilden, insbesondere eine alkylsubstituierte oder arylsubstituierte Methylenbrücke,
$R^{33}$, $R^{34}$, $R^{35}$ und $R^{36}$ für Wasserstoff stehen,
$R^{39}$ und $R^{312}$ unabhängig voneinander aus der Gruppe ausgewählt sind, die aus Wasserstoff, Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylaryl-gruppen besteht, und
$R^{310}$ und $R^{311}$ verschieden sind und aus der Gruppe ausgewählt sind, die aus Halogenatomen, $C_{1-40}$-Alkylgruppen, $C_{1-40}$-Alkoxygruppen, $C_{6-10}$-Arylgruppen, $C_{6-10}$-Aryloxygruppen, $C_{7-40}$-Arylalkylgruppen, $C_{7-40}$-Alkylarylgruppen besteht, wobei sämtliche Alkylgruppen gesättigt oder ungesättigt sein können.

6. Verfahren nach Anspruch 5, **dadurch gekennzeichnet, daß** die Metallocen-Verbindung der Formel (IV) entspricht

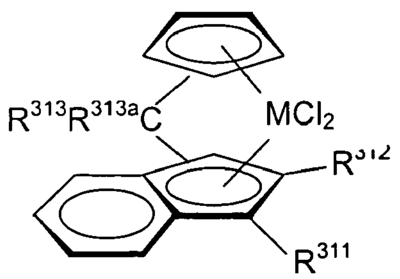

(IV)

wobei
M für ein Metall der Gruppe IIIb, IVb, Vb und VIb des Periodensystems der Elemente steht,
$R^{313}$ und $R^{313a}$ unabhängig voneinander aus der Gruppe ausgewählt werden, die aus Wasserstoff, $C_1$-$C_4$-Alkyl oder Aryl,
$R^{311}$ aus der Gruppe ausgewählt wird, die aus Wasserstoff, $C_1$-$C_4$ Alkyl und Aryl, und
$R^{312}$ aus der Gruppe ausgewählt wird, die aus Wasserstoff und $C_1$-$C_4$ Alkyl.

7. Verfahren nach Anspruch 6, **dadurch gekennzeichnet, dass** M für ein Metall der Gruppe IV steht, ganz besonders bevorzugt für Zirkonium, $R^{313}$ und $R^{313a}$ unabhängig voneinander aus der Gruppe ausgewählt werden, die aus Wasserstoff, Methyl und Phenyl besteht, wobei mindestens einer der Reste $R^{313}$ oder $R^{313a}$ nicht Wasserstoff ist, $R^{311}$ aus der Gruppe ausgewählt wird, die aus Methyl, Ethyl, Isopropanyl, tert.-Butyl und Phenyl, besteht und $R^{312}$ aus der Gruppe ausgewählt wird, die aus Wasserstoff und Methyl besteht.

8. Verfahren nach Anspruch 7, **dadurch gekennzeichnet, daß** der Katalysator aus der Gruppe ausgewählt ist, die aus

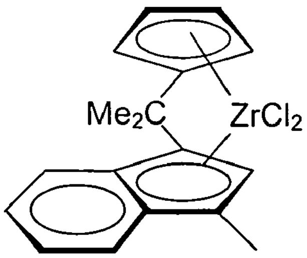

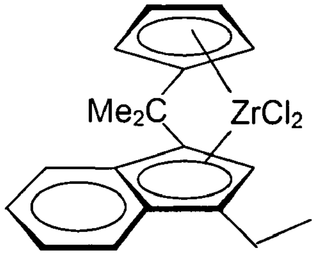

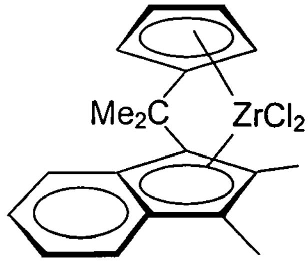

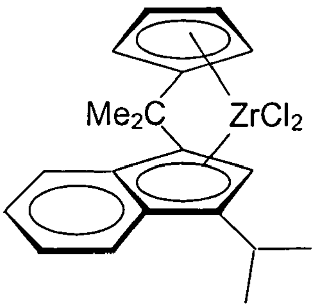

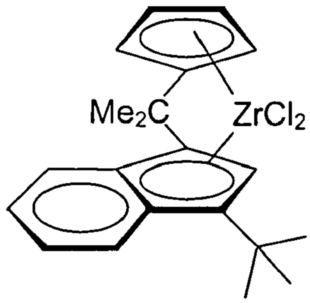

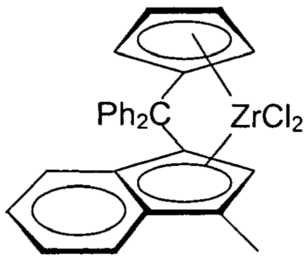

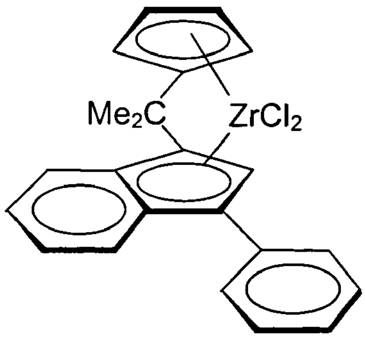

besteht.

9. Verfahren nach einem der Ansprüche 1 bis 8, **dadurch gekennzeichnet, daß** als Cokatalysator ein oder mehrere Aluminoxane der Formel Va und/oder Vb eingesetzt werden

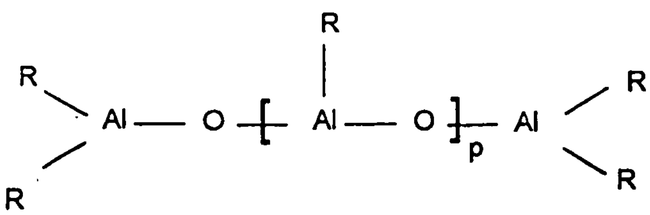

Va

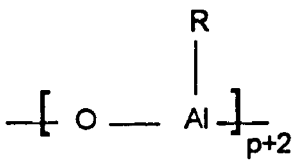

Vb

wobei in den Formeln Va und Vb die Reste R gleich oder verschieden sind und eine $C_1$-$C_6$-Alkylgruppe, eine $C_6$-$C_{18}$-Arylgruppe, Benzyl oder Wasserstoff bedeuten und p eine ganze Zahl von 2 bis 50, bevorzugt 10 bis 35 bedeutet.

**10.** Verfahren nach einem der Ansprüche 1 bis 9, **dadurch gekennzeichnet, daß** als Comonomere Ethen und Norbornen eingesetzt werden.

**11.** Verfahren nach einem der Ansprüche 1 bis 10, **dadurch gekennzeichnet, daß** als Cokatalysator eine salzartige Verbindung der Formel $R^{3'}{}_xNH_{4-x}BR^{4'}{}_4$ oder der Formel $R^{3'}{}_3PHBR^{4'}{}_4$ verwendet wird, wobei x = 1, 2 oder 3, $R^{3'}$ = Alkyl oder Aryl, gleich oder verschieden, und $R^{4'}$ = Aryl, welches fluoriert oder teilfluoriert sein kann.

**12.** Metallocen-Verbindung der Formel (IV)

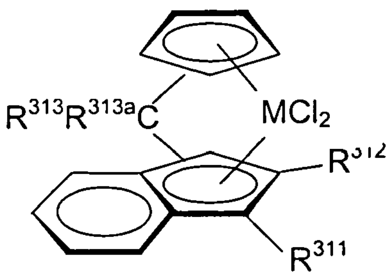

(IV)

wobei
M für ein Metall der Gruppe IIIb, IVb, Vb und VIb des Periodensystems der Elemente steht,
$R^{313}$ und $R^{313a}$ unabhängig voneinander aus der Gruppe ausgewählt werden, die aus Wasserstoff, $C_1$-$C_4$-Alkyl oder Aryl,
$R^{311}$ aus der Gruppe ausgewählt wird, die aus Wasserstoff, $C_1$-$C_4$ Alkyl und Aryl, und
$R^{312}$ aus der Gruppe ausgewählt wird, die aus Wasserstoff und $C_1$-$C_4$ Alkyl besteht, mit der Maßgabe, dass mindestens einer der Reste $R^{311}$, $R^{312}$, $R^{313}$ oder $R^{313a}$ Aryl, vorzugsweise Phenyl, bedeutet oder dass $R^{311}$ oder $R^{312}$ tert. Butyl bedeutet.

**13.** Cycloolefin-Copolymere hergestellt durch nicht-ringöffnende Polymerisation von

a) mindestens einem Cycloolefin der allgemeinen Formel (I)

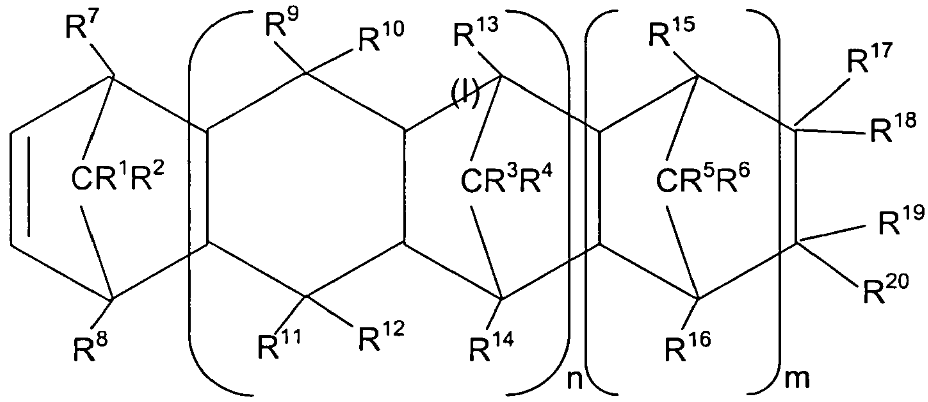

(I)

in der

- n für 0 oder 1 steht,
- m für 0 oder eine positive ganze Zahl steht,
- $R^1$, $R^2$, $R^3$, $R^4$, $R^5$, $R^6$ unabhängig voneinander aus der Gruppe ausgewählt werden, die aus Wasserstoff, Halogen, cyclischen und nicht cyclischen, verzweigten und unverzweigten aliphatischen Kohlenwasserstoffgruppen, aromatischen Kohlenwasserstoffgruppen, und Alkoxygruppen besteht,
- $R^7$, $R^8$, $R^9$, $R^{10}$, $R^{11}$, $R^{12}$, $R^{13}$, $R^{14}$, $R^{15}$, $R^{16}$ unabhängig voneinander aus der Gruppe ausgewählt weden, die aus Wasserstoff und aliphatischen Kohlenwasserstoffgruppen besteht,
- $R^{17}$, $R^{18}$, $R^{19}$, $R^{20}$ unabhängig voneinander aus der Gruppe ausgewählt sind, die aus Wasserstoff, Halogenen und aliphatischen Kohlenwasserstoffgruppen besteht,
- wobei $R^{17}$ und $R^{19}$ auch aneinander gebunden sein können, derart daß sie einen einfachen Ring oder ein Ringsystem mit mehreren Ringen bilden, wobei der Ring oder die Ringe gesättigt oder ungesättigt sein können, mit

b) mindestens einem 1-Olefin der Formel (II)

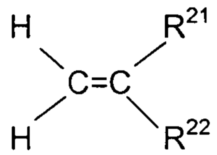

(II)

wobei $R^{21}$ und $R^{22}$ unabhängig voneinander aus der Gruppe ausgewählt sind, die aus Wasserstoff und $C_{1-20}$-Alkylgruppen besteht, **dadurch gekennzeichnet, dass** das Cycloolefin-Copolymere racemische Diaden von wiederkehrenden polycyclischen Einheiten und zusätzlich racemische Triaden von wiederkehrenden polycyclischen Einheiten enthält.

**14.** Cycloolefin-Copolymer nach Anspruch 13, **dadurch gekennzeichnet, daß** es nach einem der in den Ansprüchen 1 bis 11 definierten Verfahren hergestellt ist.

**15.** Cycloolefin-Copolymer nach einem der Ansprüche 13 und 14, **dadurch gekennzeichnet, dass** sich dieses von Norbornen und Ethylen und gegebenenfalls weiteren damit copolymerisierbaren Monomeren ableitet.

**16.** Cycloolefin-Copolymer nach Anspruch 15, **dadurch gekennzeichnet, dass** dieses in seinem $^{13}C$-NMR-Spektrum Signale zwischen 34,5 und 40,5 ppm aufweist.

**17.** Verwendung der Cycloolefin-Copolymeren nach einem der Ansprüche 13 bis 16 zur Herstellung von Formkörpern.

**18.** Verwendung nach Anspruch 17, **dadurch gekennzeichnet, dass** die Formkörper Folien, transparente Behälter

oder transparente Bauteile sind.

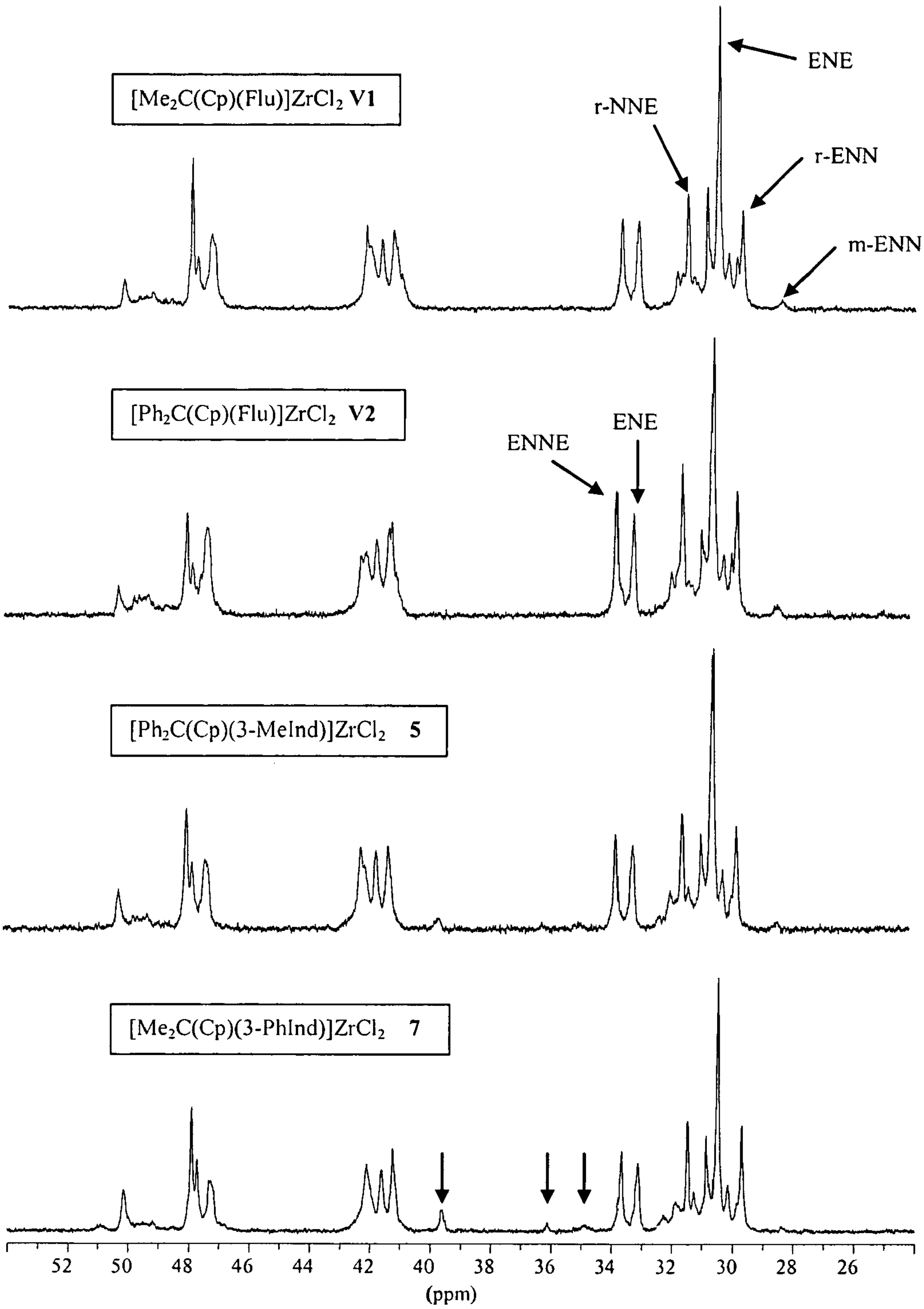
[Me2C(Cp)(Flu)]ZrCl2 V1
ENE
r-NNE
r-ENN
m-ENN
[Ph2C(Cp)(Flu)]ZrCl2 V2
ENE
ENNE
[Ph2C(Cp)(3-MeInd)]ZrCl2 5
[Me2C(Cp)(3-PhInd)]ZrCl2 7
52
50
48
46
44
42
40
38
36
34
32
30
28
26
(ppm)

Fig. 1

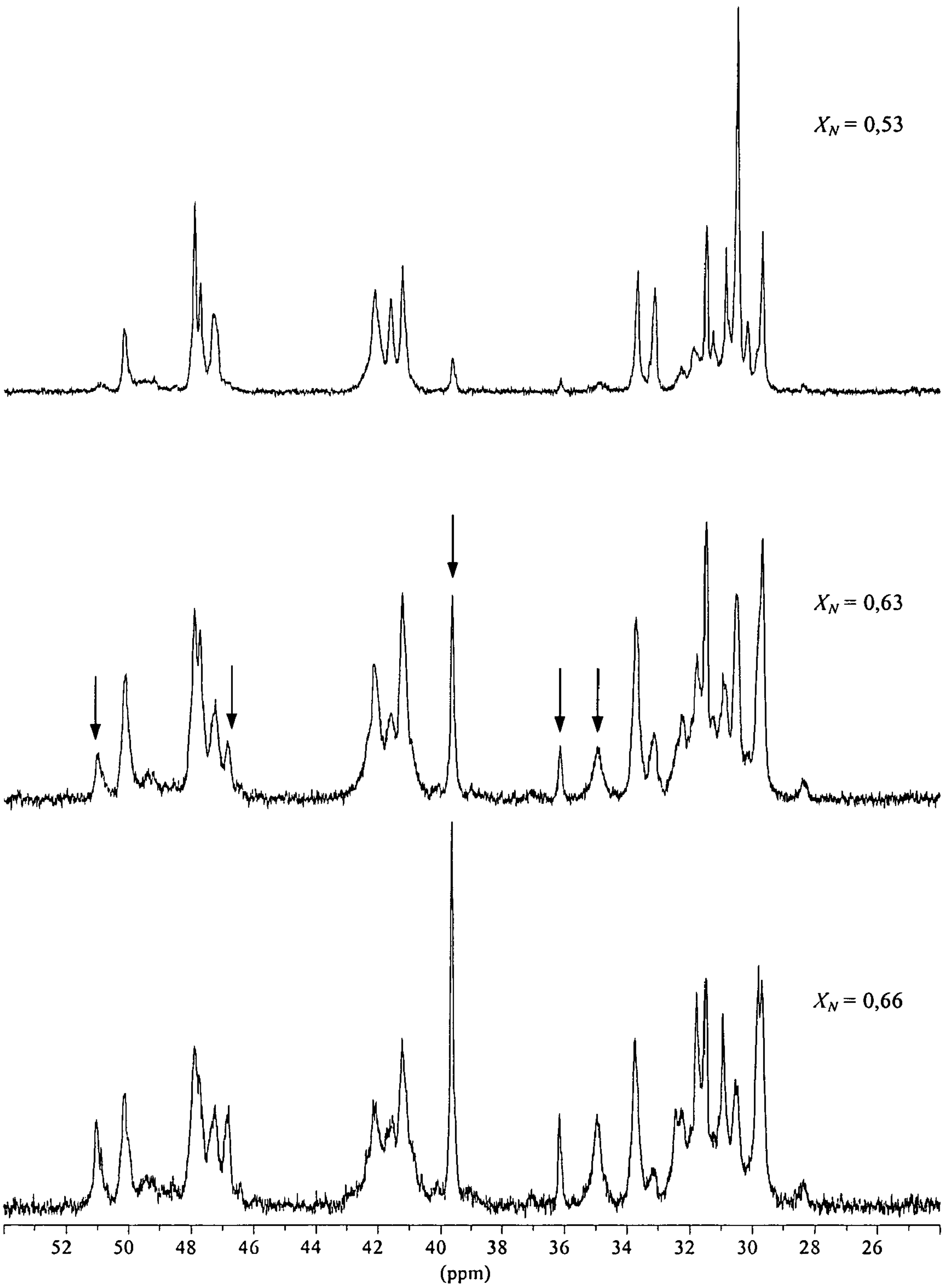


Fig. 2

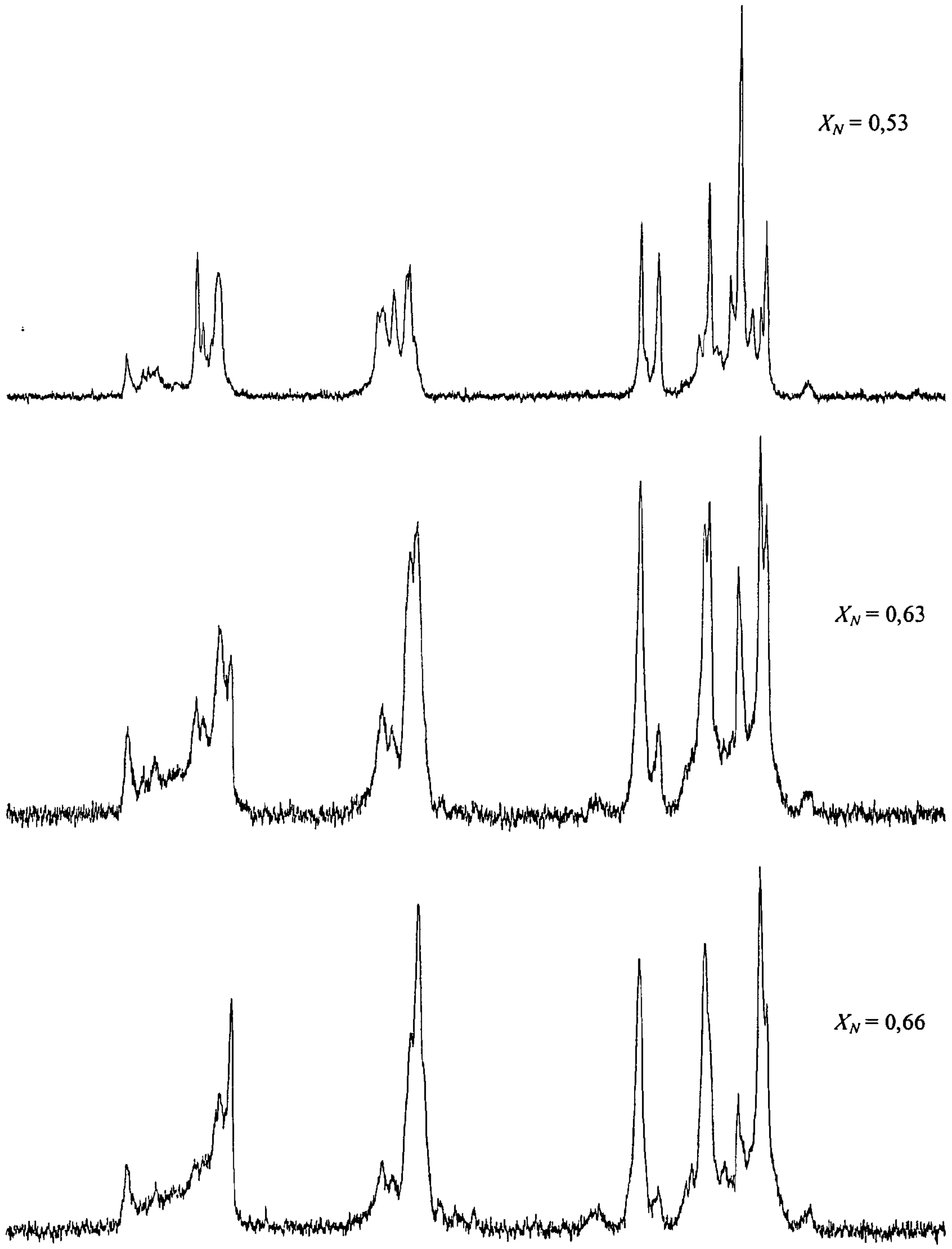


Fig. 3

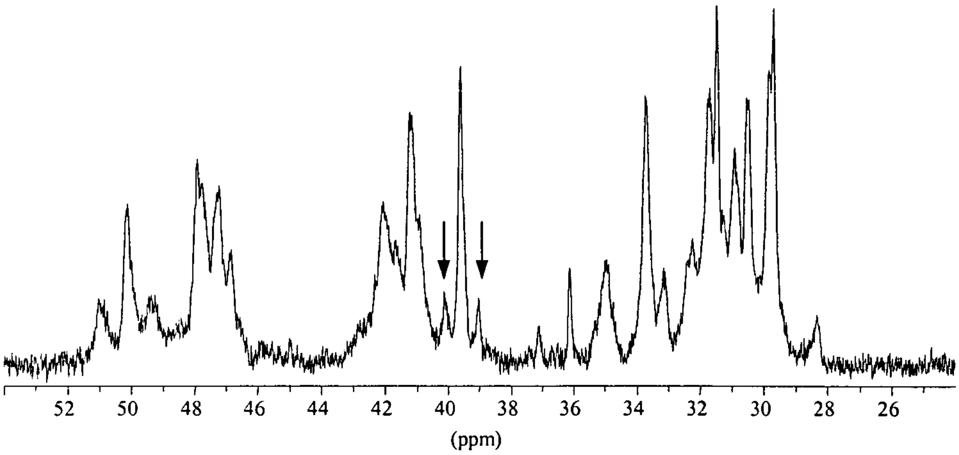
52
50
48
46
44
42
40
38
36
34
32
30
28
26
(ppm)

Fig. 4

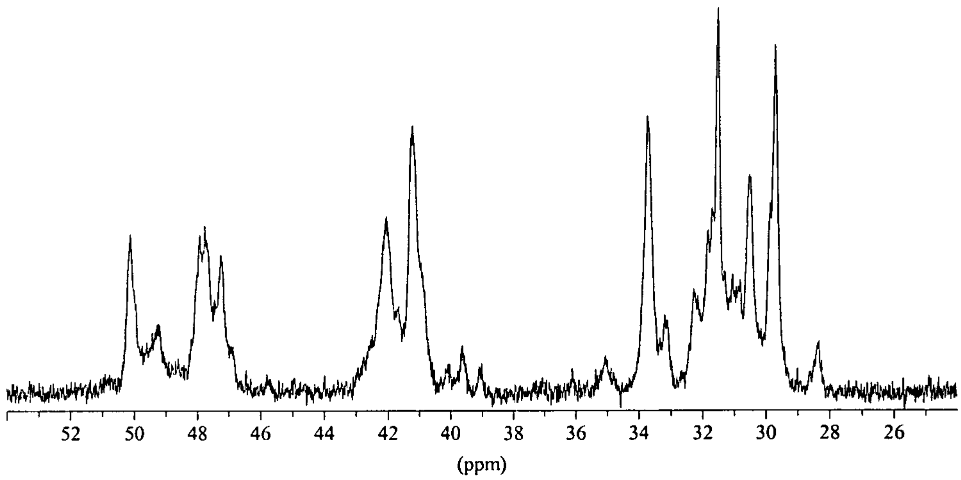
52
50
48
46
44
42
40
38
36
34
32
30
28
26
(ppm)

Fig. 5

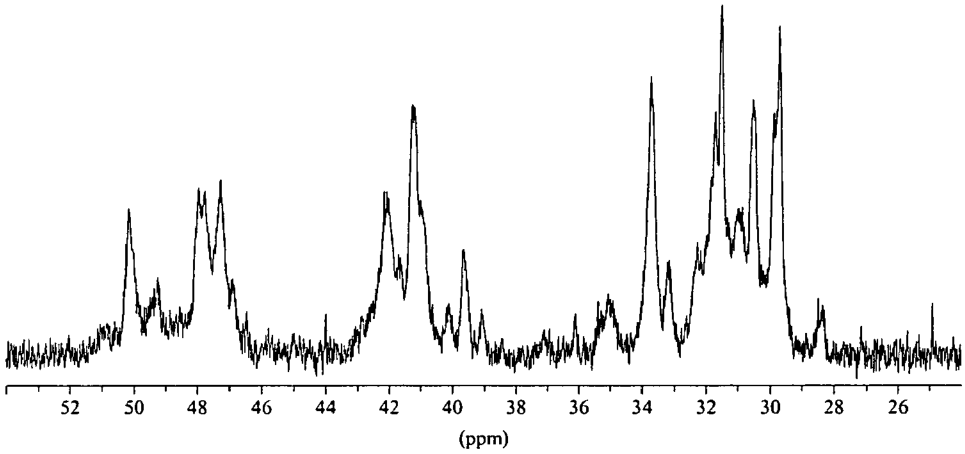
52
50
48
46
44
42
40
38
36
34
32
30
28
26
(ppm)

Fig. 6

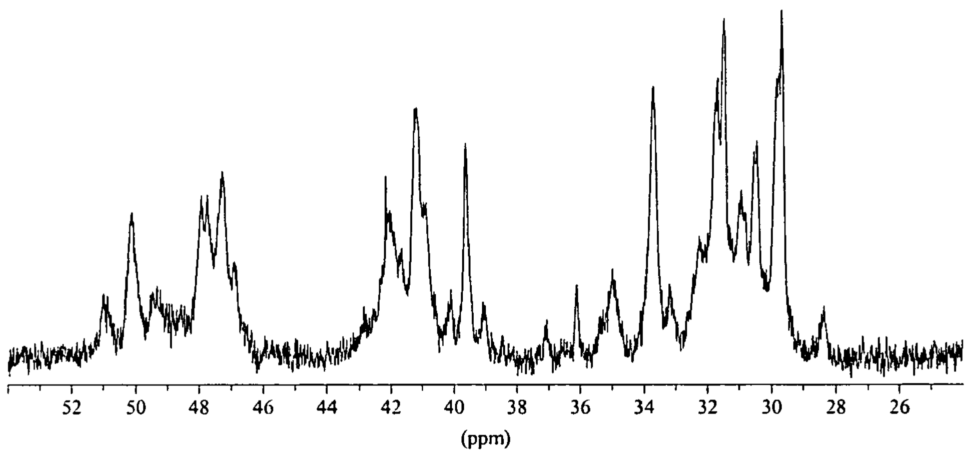
52
50
48
46
44
42
40
38
36
34
32
30
28
26
(ppm)

Fig. 7

Europäisches Patentamt

# EUROPÄISCHER RECHERCHENBERICHT

Nummer der Anmeldung
EP 08 00 2988

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2006/057309 A (SEKISUI CHEMICAL CO LTD [JP]; HIRAIKE HIROSHI [JP]; SAWADA TAKAHIKO [J) 1. Juni 2006 (2006-06-01)<br>* das ganze Dokument * | 1-18 | INV.<br>C08F232/02<br>C08F4/6592 |
| P,X | & EP 1 821 122 A (SEKISUI CHEMICAL CO LTD [JP]) 22. August 2007 (2007-08-22)<br>* Beispiele *<br>* Ansprüche *<br>* Absatz [0033] - Absatz [0034] *<br>----- | 1-18 | |
| X | DE 196 52 340 A1 (HOECHST AG [DE])<br>18. Juni 1998 (1998-06-18)<br>* Seite 4, Zeile 1 - Seite 5, Zeile 42 *<br>* Beispiele *<br>* Ansprüche *<br>----- | 1-18 | |
| X | EP 0 678 530 A (MITSUI PETROCHEMICAL IND [JP]; HOECHST AG [DE] MITSUI CHEMICALS INC [J) 25. Oktober 1995 (1995-10-25)<br>* Seite 28, Zeile 15 - Zeile 18 *<br>* Beispiele 11,12 *<br>----- | 1-18 | RECHERCHIERTE SACHGEBIETE (IPC) |
| A | LASAROV H ET AL: "INFLUENCE OF BATCH REACTION CONDITIONS ON NORBORNENE/ETHYLENE COPOLYMERS MADE USING C2V-SYMMETRIC METALLOCENE/MAO CATALYSTS"<br>1. September 1998 (1998-09-01), MACROMOLECULAR CHEMISTRY AND PHYSICS, WILEY-VCH VERLAG, WEINHEIM, DE, PAGE(S) 1939 - 1942 , XP000785738<br>ISSN: 1022-1352<br>* das ganze Dokument *<br>----- | 1-18 | C08F |
| X | EP 0 610 851 A (HOECHST AG [DE])<br>17. August 1994 (1994-08-17)<br>* Seite 7, Zeile 35 *<br>----- | 12 | |

Der vorliegende Recherchenbericht wurde für alle Patentansprüche erstellt

2

| Recherchenort | Abschlußdatum der Recherche | Prüfer |
|---|---|---|
| München | 8. Juli 2008 | Thomas, Dominik |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 08 00 2988

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-07-2008

| Im Recherchenbericht angeführtes Patentdokument | Datum der Veröffentlichung | Mitglied(er) der Patentfamilie | Datum der Veröffentlichung |
|---|---|---|---|
| WO 2006057309 A | 01-06-2006 | EP 1821122 A1 | 22-08-2007 |
| | | KR 20070085246 A | 27-08-2007 |
| | | US 2008113116 A1 | 15-05-2008 |
| EP 1821122 A | 22-08-2007 | WO 2006057309 A1 | 01-06-2006 |
| | | KR 20070085246 A | 27-08-2007 |
| | | US 2008113116 A1 | 15-05-2008 |
| DE 19652340 A1 | 18-06-1998 | AU 6205598 A | 15-07-1998 |
| | | CA 2275430 A1 | 25-06-1998 |
| | | CN 1245506 A | 23-02-2000 |
| | | WO 9827126 A1 | 25-06-1998 |
| | | EP 0946618 A1 | 06-10-1999 |
| | | ES 2196395 T3 | 16-12-2003 |
| | | JP 2001506689 T | 22-05-2001 |
| | | KR 20000057613 A | 25-09-2000 |
| | | US 6316560 B1 | 13-11-2001 |
| EP 0678530 A | 25-10-1995 | CA 2147589 A1 | 23-10-1995 |
| | | CN 1112570 A | 29-11-1995 |
| | | DE 69521826 D1 | 30-08-2001 |
| | | DE 69521826 T2 | 11-04-2002 |
| | | US 5559199 A | 24-09-1996 |
| EP 0610851 A | 17-08-1994 | CN 1101052 A | 05-04-1995 |
| | | JP 3416244 B2 | 16-06-2003 |
| | | JP 6271628 A | 27-09-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 5043619 A
- JP 52002124 A
- EP 302424 A
- EP 578838 A
- EP 277004 A


### In der Beschreibung aufgeführte Nicht-Patentliteratur


- **R. A. WENDT ; G. FINK.** *Macromol. Chem. Phys.,* 2001, vol. 202, 3490
- **FIERRO, RICARDO et al.** Asymmetric Zirconocene Precursors for Catalysts of Propylene Polymerisation. *J. Polym. Sci., Part A: Polym. Chem.,* vol. 32 (15), 2817-24
- **LEINO, REKO et al.** Syndiospecific Propylene Polymerization with C1 Symmetric Group 4 ansa-Metallocene Catalysts. *Macromolecules,* 2001, vol. 34 (7), 2072-2082
- **YOON, SUNG CHEOL et al.** Synthesis, structure, and catalytic properties of ansa-zirconocenes, Me2X(Cp)(RInd)ZrCl2 (X=C, Si, R=2-p or 3-p-tolyl. *J. Organomet. Chem.,* 1997, vol. 534 (1-2), 81-87
- **GOMEZ, FERNANDO J. et al.** Syndiospecific Propylene Polymerization Using C1-Symmetric ansa-Metallocene Catalysts: Substituent and Bridge Effects. *Macromolecules,* 2002, vol. 35 (9), 3358-3368
- **S. PASYNKIEWICZ.** *Polyhedron,* 1990, vol. 9, 429